# EUROPÄISCHE PATENTANMELDUNG

(11) **EP 4 345 958 A2**
(43) Veröffentlichungstag der Anmeldung: **03.04.2024**
(21) Anmeldenummer: 23199945.9
(22) Anmeldetag: 27.09.2023
(51) Int. Cl.: H01M 8/2404

(54) **INSPEKTION BEI DER HERSTELLUNG VON MODULEN ODER VORSTUFEN VON MODULEN**

(30) Priorität: 27.09.2022 DE 102022124777
(71) Anmelder: MB Automation GmbH & Co. KG, 93426 Roding (DE)
(72) Erfinder: Vasko, Ondrej, 92421 Schwandorf (DE); Breu, Christina, 93466 Chamerau (DE)
(74) Vertreter: Schmidt, Steffen J.

(57) **Zusammenfassung**

Bei einer Inspektionsvorrichtung nimmt ein erster Lagen-Förderer eine Anoden- oder Kathoden-Lage auf und bringt sie zu einer ersten Abgabestelle. Ein Stapeltisch nimmt an der ersten Abgabestelle die Anoden- oder Kathoden-Lage zur Bildung eines Lagen-Stapels auf. Der erste Lagen-Förderer gibt an der ersten Abgabestelle eine Anoden- oder Kathoden-Lage an den Stapeltisch ab. Ein vierter Bildaufnehmer ist auf einen vierten Bereich des Lagen-Stapels aus Anoden- und Kathoden-Lagen in einer flächigen Seitenansicht des Lagen-Stapels ausgerichtet und nimmt einen Bildeinzug vor, nachdem die Anoden- oder Kathoden-Lage auf dem Lagen-Stapel auf dem Stapel-Tisch abgelegt ist, wobei der vierte Bereich eine Ecke einer sich zuoberst auf dem Lagen-Stapel befindlichen Anoden- oder Kathoden-Lage und/oder eine Hochkante des Lagen-Stapels umfasst. Ein fünfter Bildaufnehmer ist auf einen fünften Bereich des Lagen-Stapels aus Anoden- und Kathoden-Lagen in einer flächigen Seitenansicht des Lagen-Stapels ausgerichtet und nimmt einen Bildeinzug vor, nachdem die Anoden- oder Kathoden-Lage auf dem Lagen-Stapel auf dem Stapel-Tisch abgelegt ist, wobei der fünfte Bereich eine Ecke einer sich zuoberst auf dem Lagen-Stapel befindlichen Anoden- oder Kathoden-Lage und/oder eine Hochkante des Lagen-Stapels umfasst. Der vierte Bereich bzw. der fünfte Bereich der Anoden- oder Kathoden-Lage umfassen in der Lagen-Fläche benachbart oder diagonal zueinander liegende Bereiche des Lagen-Stapels aus Anoden- und Kathoden-Lagen in einer jeweiligen Seitenansicht des Lagen-Stapels.

## Beschreibung

### Hintergrund

Hier wird eine Inspektion bei der Herstellung von Modulen oder Vorstufen von Modulen offenbart. Diese Module oder deren Vorstufen können zum Beispiel Lagenmaterial enthaltende Schichtanordnungen, Anordnungen für Brennstoff- oder Batterie-Zellen, oder Teile zu deren Herstellung sein. Das Lagenmaterial kann Elektroden-Lagen umfassen, die als Anoden- oder als Kathoden-Lagen ausgebildet sind. Die Inspektion ist als Verfahren und als Vorrichtung offenbart. Details dazu definieren die Ansprüche. Auch die Beschreibung enthält relevante Angaben zur Struktur und Funktionsweise der Inspektion sowie zu Vorrichtungs- und Verfahrens-Varianten.

### Stand der Technik

Die WO 2021 171 946 A1 betrifft einen Stapeltisch, auf dem Laminatstapel aus Trennfolien und Elektrodenlage gestapelt werden. Eine Transporteinheit dient zum Transportieren der Trennfolien und Elektrodenlage und zum Ablegen auf dem Stapeltisch. Die obige Prüfvorrichtung prüft die Position der Elektroden-Lage in den von der Transporteinheit freigegebenen Laminatstapeln.

Die JP 2014 078464 A betrifft eine Laminiermaschine zur Herstellung eines laminierten Körpers aus einer rechteckigen Folie als positive Elektrode, einer rechteckigen Folie als negative Elektrode, die abwechselnd laminiert werden über eine rechteckige Trennfolie.

Die WO 2021 171 946 A1 betrifft eine Prüfvorrichtung zum Prüfen der Position der Elektrodenlage in einem Laminat, in dem eine Trennfolie und eine Elektrodenlage durch einen Klebstoff gebunden sind, von der Trennfolienseite aus. Ein InfrarotStrahler bestrahlt das Laminat von der Trennfolienseite aus mit Infrarotlicht. Eine infrarotlichtempfindliche Kamera nimmt das durch die Trennfolie hindurchgelassene und von der Elektrodenlage reflektierte Infrarotlicht auf. Eine Erfassungseinheit erfasst die Position der Elektrodenlage auf Basis des von der Kamera aufgenommenen Bildes.

Die WO 2020 130 184 A1 beschreibt die Herstellung eines Zellenstapels einer Sekundärbatterie. Ein Stapeltisch ist hin- und her bewegbar. Eine Separator-Zuführeinheit ist auf dem Stapeltisch positioniert und führt einen Separator dem Stapeltisch zu. Ein erster Mehrfachkopf ist auf einer Seite des Stapeltisches vorgesehen und stapelt eine Lage nach der anderen, indem er die Elektroden-Lagen auf dem zu einer Seite bewegten Stapeltisch ablegt. Ein zweiter Mehrfachkopf ist auf der anderen Seite des Laminierungstisches vorgesehen und stapelt die Elektroden-Lagen auf dem zur anderen Seite bewegten Stapeltisch.

Das Dokument DE 10 2015 218 138 A1 betrifft eine bogenverarbeitende Maschine, die zur Ablage von Bogen auf einem Bogen-Stapel eingerichtet ist. Zur Einstellung verschiedener Betätigungsmittel für das Einstellen einer Ablagegeschwindigkeit für die abzulegenden Bogen, eines Freigabeorts für die abzulegenden Bogen und einer Positionierung einer Bogenbremse kann die Ablage der Bogen mittels Kamerasensoren überwacht werden.

### Technisches Problem

Ausgehend hiervon soll eine kostengünstige und robuste Anordnung einer Stapeleinheit und eine Vorgehensweise beim Stapeln von Lagenmaterial mit hoher Verarbeitungsgeschwindigkeit bereitgestellt werden, um Module oder Vorstufen von Modulen, zum Beispiel von Lagenmaterial enthaltenden Brennstoff- oder Batterie-Zellen, mit hoher Präzision zu fertigen.

### Vorgeschlagene Lösung

Zur Lösung dieses Problems werden Inspektions-Vorrichtungen und InspektionsVerfahren gemäß den unabhängigen Vorrichtungs- bzw. Verfahrens-Ansprüchen vorgeschlagen.

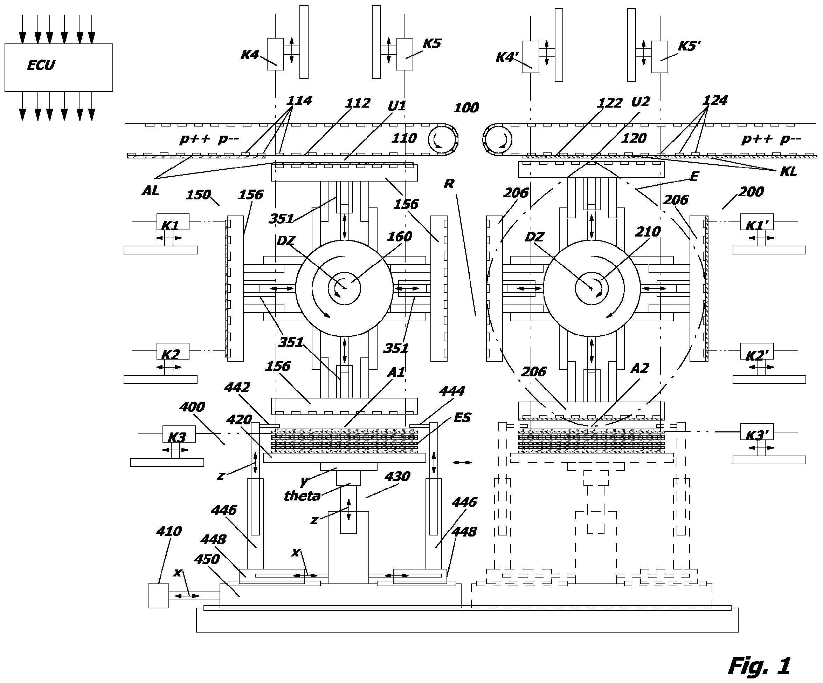

Die hier vorgestellten Lösungen zur Inspektion können in eine Handhabung (Vorrichtung oder Verfahren) integriert sein, bei der sich der Stapeltisch hin und her bewegt und an den jeweiligen Endlagen durch einen von zwei Lagenförderern mit jeweils einer Anode bzw. Kathode beschickt wird zur Bildung des Elektrodenstapels. Die Hin-und-Her-Bewegung des Stapeltischs zwischen der ersten und der zweiten Abgabestelle begrenzt die Anzahl der abzulegenden Anoden- bzw. Kathoden-Lagen pro Zeiteinheit. Eine hier vorgestellte Lösung, den / die jeweiligen Aufnehmer des einen Lagen-Wenders beim Annähern an den / die Aufnehmer des anderen Lagen-Wenders insbesondere im Raum zwischen den beiden Lagen-Wendern radial zurückzuziehen, erlaubt einen geringeren Abstand zwischen der ersten und der zweiten Abgabestelle als bei einer kreisförmigen Flugbahn der Aufnehmer beider Lagen-Wender, die sich nicht berühren dürfen. Damit kann die Länge des Verfahrwegs des Stapeltischs zwischen den beiden Abgabestellen verringert werden. Dies ist insbesondere auch relevant, nachdem die Aufnehmer die Anoden- bzw. Kathoden-Lagen auf der Ablage des Stapeltisches abgelegt haben (6 Uhr Position in der Fig. 1), und die leeren Aufnehmer in den Raum zwischen den beiden Lagen-Wendern eintreten. Ohne dieses radiale Zurückziehen der Aufnehmer wären deren Flugbahnen deutlich größer, was einen vergrößerten Abstand der ersten und der zweiten Abgabestelle zur Folge haben müsste. Außerdem wird so eine kompaktere Bauform der gesamten Vorrichtung möglich. Insgesamt bewegen sich in einer Variante die Aufnehmer der beiden LagenWender jeweils auf einer angenäherten, stehenden Ellipse, deren (senkrechte) Hauptachsen vom Zentrum der jeweiligen Übergabestelle zum Zentrum der jeweiligen Abgabestelle reicht, und deren (waagrechte) Nebenachsen einander nicht berühren. Das Führen der Aufnehmer entlang dieser angenähert elliptischen Bahnen vermeidet eine Kollision der Aufnehmer beim Drehen von der Abgabestelle zurück zur Übergabestelle, obwohl die beiden Lagen-Wender dicht bei einander angeordnet sind, um den Weg des Stapeltisches von einem Lagen-Wender zum anderen so kurz wie möglich zu halten.

Bei einer Variante der Vorrichtung sind der erste und der zweite Lagen-Wender dazu vorgesehen und eingerichtet, mittels ihres jeweiligen zweiten Antriebs die Aufnehmer herauszufahren, wenn die Aufnehmer sich der jeweiligen ersten bzw. zweiten Übergabestelle und/ oder der ersten bzw. der zweiten Abgabestelle nähern. Zum Aufnehmen der Anoden- bzw. Kathoden-Lagen an den jeweiligen Übergabestellen (12 Uhr bzw. 6 Uhr Position in der Fig. 1) können die Aufnehmer der beiden LagenWender radial ausgefahren werden. Die radiale Bewegung der Aufnehmer beginnt, bevor die Aufnehmer die 6 bzw. 12 Uhr Position erreichen, und nicht erst in der erreichten Position.

Dies erhöht die Ortsgenauigkeit der Aufnahme der Anoden- bzw. Kathoden-Lagen von den beiden Förderern an den jeweiligen Übergabestellen. Damit ist eine höhere Anzahl an Anoden- bzw. Kathoden-Lagen pro Zeiteinheit auf der Ablage des Stapeltischs möglich, ohne die Genauigkeit des Aufbaus des Elektroden-Stapels zu beeinträchtigen.

In einer Variante der Vorrichtung ist in dem Raum zwischen den beiden LagenWendern ein Endlos-Separator von oben zugeführt, der auf dem Stapeltisch z-förmig gefaltet wird. Der Stapeltisch fährt permanent horizontal zwischen den beiden Ablagepositionen hin und her, so dass für einen Elektroden-Stapel, beginnend mit dem Separator und danach abwechselnd die Anoden- bzw. Kathoden-Lagen, immer durch den gefalteten Separator getrennt, abwechselnd durch die beiden Lagen-Wender auf dem Stapeltisch abgelegt werden.

Bei einer Variante der Vorrichtung sind der erste Förderer und der zweite Förderer benachbart und im Abstand zueinander angeordnet. Bei einer Variante der Vorrichtung sind der erste Förderer und/oder der zweite Förderer als Bandförderer ausgestaltet, die mit ihrer jeweiligen Unterseite dem ersten bzw. zweiten Lagen-Wender zugewandt sind, um die einzelnen Anoden-Lagen bzw. die einzelnen Kathoden-Lagen an ihrer Unterseite zu der ersten bzw. der zweiten Übergabestelle zu fördern.

Bei einer Variante der Vorrichtung haben der erste Förderer und/oder der zweite Förderer jeweils ein gesteuertes Unter-/Über-Druck-Förderband. Sie sind dazu vorgesehen und eingerichtet, mittels gesteuertem pneumatischem Unterdruck die einzelnen Anoden-Lagen bzw. die einzelnen Kathoden-Lagen aufzunehmen und während des Förderns zu der ersten bzw. der zweiten Übergabestelle zu halten. Bei einer Variante der Vorrichtung sind mittels einem gesteuertem pneumatischem Überdruck, zum Beispiel in Form eines kurzen Blas-Stoßes, die einzelnen Anoden-Lagen bzw. die einzelnen Kathoden-Lagen in der ersten bzw. der zweiten Übergabestelle an den ersten bzw. zweiten Lagen-Wender abzugeben.

Bei einer Variante der Vorrichtung haben der erste und/oder der zweite LagenWender jeweils mehrere Aufnehmer zum Aufnehmen der einzelnen Anoden- oder Kathoden-Lagen. Die Aufnehmer sind dazu vorgesehen und dazu eingerichtet, nacheinander an der jeweiligen Übergabestelle und der jeweiligen Abgabestelle kontinuierlich oder getaktet vorbei zu rotieren. Dabei können die Aufnehmer des ersten und/oder zweiten Lagen-Wenders die jeweilige einzelne Anoden- oder Kathoden-Lage aufnehmen bzw. abgeben.

Der Rotationswinkel des ersten und/oder des zweiten Lagen-Wenders beträgt zum Beispiel etwa 180°. Er kann jedoch auch weniger (zum Beispiel 90°) oder mehr (zum Beispiel 270°) betragen. Der Rotationswinkel beschreibt das Maß, um das eine Lage zwischen der Übergabestelle und der Abgabestelle durch den Lagen-Förderer geschwenkt oder gewendet wird. Durch das Aufnehmen einer Lage mittels des LagenWenders von dem Förderer, das Wenden und das anschließende Ablegen auf dem Stapeltisch wird die Lage gewendet. Das heißt, die von dem Förderer abliegende freie Oberseite der Lage vor dem Aufnehmen durch die Aufnehmer ist dieselbe freie Oberseite der Lage nach dem Ablegen auf dem Stapeltisch, allerdings mit um den Rotationswinkel (zum Beispiel 180°) gewendeter Orientierung. Das Rotieren des ersten bzw. zweiten Lagen-Wenders und deren Aufnehmer erfolgt um deren jeweilige Drehzentren / Drehachsen.

Bei einer Variante der Vorrichtung haben der erste und der zweite Lagen-Wender im Wesentlichen einen übereinstimmenden Aufbau, übereinstimmende Funktion und/oder übereinstimmende Abmessungen. Bei einer Variante der Vorrichtung sind der erste und der zweite Lagen-Wender dazu vorgesehen und eingerichtet, mittels ihres jeweiligen ersten Antriebs im bzw. gegen den Uhrzeigersinn so zu drehen, dass die einzelnen Anoden- bzw. Kathoden-Lagen von ihrer Übergabestelle zu ihrer Abgabestelle unter Vermeidung eines Raums zwischen dem ersten und dem zweiten Lagen-Wender gelangen. Mit anderen Worten werden die einzelnen Anoden- bzw. Kathoden-Lagen von ihrer Übergabestelle zu ihrer Abgabestelle "außenherum" um den ersten bzw. zweiten Lagen-Wender gefördert, und nicht zwischen den beiden Lagenwendern hindurch.

Bei einer Variante der Vorrichtung haben die erste und die zweite Übergabestelle zwischen dem ersten Förderer bzw. dem zweiten Förderer und dem ersten bzw. dem zweiten Lagen-Wender jeweils ein erstes Zentrum, sowie die erste bzw. die zweite Abgabestelle haben zwischen dem ersten bzw. dem zweiten Lagen-Wender und Stapeltisch jeweils ein zweites Zentrum. Bei einer Variante der Vorrichtung liegen diese jeweiligen ersten und zweiten Zentren auf einer Geraden, die ein jeweiliges Drehzentrum des ersten Förderers bzw. des zweiten Förderers im Wesentlichen zumindest annähernd schneiden.

Bei einer Variante der Vorrichtung hat der Stapeltisch eine Ablage für die einzelnen Anoden- und Kathoden-Lagen. Bei einer Variante der Vorrichtung hat der Stapeltisch eine ein- oder mehrachsige Stelleinrichtung, die vorgesehen und dazu eingerichtet ist, die Ablage längs der oder um die jeweilige(n) Achse(n) zu bewegen, um sie zur ersten bzw. zur zweiten Abgabestelle auszurichten. Dies erlaubt ein präzises Abstapein der Lagen auf der Ablage, was eine sichere Produktion ohne große Verluste an fehlproduzierten Elektroden-Stapeln ermöglicht.

Bei einer Variante der Vorrichtung hat der Stapeltisch wenigstens einen ersten und wenigstens einen zweiten Klemmfinger, die vorgesehen und dazu eingerichtet sind, mit der jeweils obersten der Anoden- und Kathoden-Lagen abwechselnd oder gleichzeitig in oder außer Eingriff zu kommen und/oder die jeweils oberste der Anodenund Kathoden-Lagen gegen den Elektroden-Stapel auf der Ablage zu drängen. Die Ablage / der Stapeltisch ist in einer Variante mit den Klemmfingern um eine z-Achse (Hochachse) rotierbar. Die Ablage / der Stapeltisch ist in einer Variante mit den Klemmfingern in x- und/oder y-Richtung positionierbar.

Bei einer Variante der Vorrichtung sind der erste und der zweite Lagen-Wender dazu vorgesehen und dazu eingerichtet, die einzelnen Anoden-Lagen und die einzelnen Kathoden-Lagen mittels eines gesteuerten pneumatischen Unterdrucks aufzunehmen und während des Wendens zu der ersten bzw. der zweiten Abgabestelle zu halten. Zusätzlich oder stattdessen sind mittels eines gesteuerten pneumatischen Überdrucks die einzelnen Anoden-Lagen und die einzelnen Kathoden-Lagen in der ersten bzw. der zweiten Abgabestelle abzugeben, um die Lagen auf der Ablage zu stapeln.

Bei einer Variante der Vorrichtung haben der erste und der zweite Lagen-Wender jeweils eine drehbare Über-/Unter-Druck-Verteilung, die dazu vorgesehen und dazu eingerichtet ist, die Aufnehmer mit dem gesteuerten pneumatischen Unterdruck und/oder Überdruck zu speisen. Bei einer Variante der Vorrichtung sind der erste und der zweite Lagen-Wender vorgesehen und dazu eingerichtet, jeweils nur einzelne der Anoden-Lagen bzw. nur einzelne der Kathoden-Lagen zu der ersten bzw. der zweiten Abgabestelle hin zu wenden.

Bei einer Variante der Vorrichtung ist jede Stelleinrichtung vorgesehen und dazu eingerichtet, die Ablage beim Stapeln der einzelnen Anoden-Lagen und einzelnen Kathoden-Lagen um eine Wegstrecke abzusenken, die einer Dicke einer einzelnen Anoden-Lage oder einer einzelnen Kathoden-Lage im Wesentlichen entspricht.

Bei einer Variante der Vorrichtung ist der erste Antrieb als Drehantrieb ausgestaltet, der dazu vorgesehen und dazu eingerichtet ist, den Aufnehmer des Lagen-Wenders zu wenden. Bei einer Variante der Vorrichtung hat der zweite Antrieb einen Drehantrieb mit einer mit den Aufnehmern getrieblich gekoppelten Exzenterwelle, um den Aufnehmer des jeweiligen Lagen-Wenders radial zurückzuziehen und/oder auszufahren. Alternativ dazu hat der zweite Antrieb einen Linearantrieb, der mit einem der Aufnehmer getrieblich gekoppelt ist, um die Aufnehmer des jeweiligen LagenWenders radial zurückzuziehen und/oder auszufahren.

Ein Verfahren zur Herstellung von Modulen oder Vorstufen von Modulen, insbesondere von Lagenmaterial enthaltendem Brennstoff- oder Batterie-Zellen, ausgeführt zum Beispiel mit der oben erläuterten Vorrichtung, umfasst, zum Beispiel in folgender Reihenfolge, die Schritte: Fördern einzelner Anoden-Lagen zu einer ersten Übergabestelle zum Übergeben an einen ersten Lagen-Wender; Fördern einzelner Kathoden-Lagen zu einer zweiten Übergabestelle zum Übergeben an einen zweiten Lagen-Wender; Aufnehmen jeweiliger einzelner Anoden- bzw. Kathoden-Lagen an der jeweiligen ersten oder zweiten Übergabestelle mittels entsprechender Aufnehmer eines jeweiligen ersten bzw. zweiten Lagen-Wenders; Wenden der aufgenommenen einzelnen Anoden- bzw. Kathoden-Lagen um einen jeweiligen Rotationswinkel zu einer jeweiligen ersten bzw. zweiten Abgabestelle; Hin-und-Her-Fahren eines Stapeltisches mit einem Antrieb zwischen der ersten und der zweiten Abgabestelle; Abgeben der jeweiligen einzelnen Anoden- bzw. Kathoden-Lage an der ersten bzw. der zweiten Abgabestelle an den Stapeltisch, wenn sich dieser an der ersten bzw. der zweiten Abgabestelle befindet; und radiales Zurückziehen des Aufnehmers des ersten und/ oder des zweiten Lagen-Wenders, wenn sie sich dem Aufnehmer des anderen Lagen-Wenders nähert.

Dieses Nähern des Aufnehmers des einen Lagen-Wenders an den Aufnehmer des anderen Lagen-Wenders ist insbesondere in dem Raum zwischen den beiden LagenWendern relevant, wenn sich der Aufnehmer auf dem Weg von seiner Abgabestelle zu seiner Übergabestelle oder von seiner Übergabestelle zu seiner Abgabestelle einem Aufnehmer des anderen Lagen-Wenders nähert.

Eine erste Variante der Inspektionsvorrichtung für Lagenmaterial insbesondere zur Herstellung von Brennstoff- oder Batterie-Zellen hat einen ersten Lagen-Förderer und einen ersten Antrieb und ist dazu vorgesehen und eingerichtet, eine jeweilige einzelne Anoden- oder Kathoden-Lage mittels des wenigstens einen Aufnehmers von einer ersten Übergabestelle aufzunehmen, und zu einer ersten Abgabestelle zu bringen. Bei dieser Variante ist der erste Lagen-Förderer dazu vorgesehen und eingerichtet, an der ersten Abgabestelle jeweils eine einzelne Anoden- oder Kathoden-Lage von ihrem Aufnehmer an den Stapeltisch abzugeben, wenn sich der jeweilige wenigstens eine Aufnehmer an der ersten Abgabestelle befindet. Bei dieser Variante ist wenigstens ein Antrieb vorgesehen, um den Aufnehmer und den Stapeltisch relativ zueinander in Abhängigkeit von einer Signalisierung basierend auf einer Verarbeitung des ersten und/ oder zweiten Bildeinzugs auszurichten. Bei dieser Variante ist ein erster Bildaufnehmer zwischen der ersten Übergabestelle und der ersten Abgabestelle auf einen ersten Bereich des ersten Lagen-Förderers ausgerichtet und zu einem ersten Bildeinzug vorgesehen und eingerichtet, wenn der wenigstens eine Aufnehmer des ersten Lagen-Förderers den ersten Bildaufnehmer passiert. Bei dieser Variante ist alternativ oder kumulativ ein zweiter Bildaufnehmer zwischen der ersten Übergabestelle und der ersten Abgabestelle auf einen zweiten Bereich des ersten Lagen-Förderers ausgerichtet und zu einem zweiten Bildeinzug vorgesehen und eingerichtet, wenn der wenigstens eine Aufnehmer des ersten Lagen-Förderers den zweiten Bildaufnehmer passiert. Bei dieser Variante ist ein Stapeltisch dazu vorgesehen und dazu eingerichtet, an der ersten Abgabestelle die jeweilige einzelne Anoden- oder Kathoden-Lage zur Bildung eines Lagen-Stapels aufzunehmen.

Bei einer Variante umfasst der erste Lagen-Förderer einen Lagen-Wender, der dazu vorgesehen und eingerichtet ist, eine jeweilige einzelne Anoden- oder Kathoden-Lage mittels des wenigstens einen Aufnehmers von der ersten Übergabestelle aufzunehmen, und um einen jeweiligen Rotationswinkel zu einer ersten Abgabestelle zu drehen.

Bei einer Variante umfasst der erste Lagen-Förderer einen Lagen-Greifer, der dazu vorgesehen und eingerichtet ist, eine jeweilige einzelne Anoden- oder Kathoden-Lage mittels eines Aufnehmers, zum Beispiel in Gestalt eines Saug- oder Greifwerkzeugs, von der ersten Übergabestelle aufzunehmen und zu der ersten Abgabestelle zu bringen.

Bei einer Variante ist ein zweiter Lagen-Förderer dazu vorgesehen und eingerichtet, eine einzelne Kathoden- oder Anoden-Lage aufzunehmen und zu einer zweiten Abgabestelle zu bringen. Bei einer Variante ist ein erster Bildaufnehmer zwischen der zweiten Übergabestelle und der zweiten Abgabestelle auf einen ersten Bereich des zweiten Lagen-Förderers ausgerichtet und zu einem ersten Bildeinzug vorgesehen und eingerichtet, wenn der zweite Lagen-Förderer den ersten Bildaufnehmer passiert. Alternativ oder kumulativ ist bei einer Variante ein zweiter Bildaufnehmer zwischen der zweiten Übergabestelle und der zweiten Abgabestelle auf einen zweiten Bereich des zweiten Lagen-Förderers ausgerichtet und zu einem zweiten Bildeinzug vorgesehen und eingerichtet, wenn der zweite Lagen-Förderer den zweiten Bildaufnehmer passiert.

Bei einer Variante umfasst der zweite Lagen-Förderer einen Lagen-Wender, der dazu vorgesehen und eingerichtet ist, eine jeweilige einzelne Anoden- oder Kathoden-Lage mittels des wenigstens einen Aufnehmers von der zweiten Übergabestelle aufzunehmen und um einen jeweiligen Rotationswinkel zu einer zweiten Abgabestelle zu drehen.

Bei einer Variante umfasst der zweite Lagen-Förderer einen Lagen-Greifer, der dazu vorgesehen und eingerichtet ist, eine jeweilige einzelne Anoden- oder Kathoden-Lage mittels eines Aufnehmers, zum Beispiel in Gestalt eines Saug- oder Greifwerkzeugs, von der zweiten Übergabestelle aufzunehmen und zu der zweiten Abgabestelle zu bringen.

Bei einer Variante ist dem Stapeltisch ein Antrieb zugeordnet, der dazu vorgesehen und dazu eingerichtet ist, den Stapeltisch zwischen der ersten und der zweiten Abgabestelle hin- und her zu fahren. Bei einer Variante sind der erste und der zweite Lagen-Förderer jeweils dazu vorgesehen und eingerichtet, an der ersten bzw. der zweiten Abgabestelle jeweils eine einzelne Anoden- oder Kathoden-Lage an den Stapeltisch abzugeben. Bei einer Variante ist wenigstens ein Antrieb vorgesehen, um den jeweiligen Lagen-Förderer und/ oder den jeweiligen wenigstens einen LagenWender oder Lagen-Greifer relativ zu dem Stapeltisch in Abhängigkeit von einer Signalisierung basierend auf einer Verarbeitung des ersten und/ oder zweiten Bildeinzugs in einer Steuerung auszurichten. Dieser Antrieb kann als ein zusätzlicher Antrieb in Y-Richtung und/oder als ein Drehantrieb um z-Achse in theta für die Ablage ausgestaltet sein.

Bei einer Variante sind der erste Bereich und der zweite Bereich des wenigstens einen Aufnehmers des Lagen-Wenders diagonal zueinander liegende Eck-Bereiche des wenigstens einen Aufnehmers des Lagen-Wenders. Bei einer Variante sind der erste Eck-Bereich und der zweite Eck-Bereich des wenigstens einen Aufnehmers des Lagen-Wenders zum Aufnehmen einer ersten Ecke bzw. zweiten Ecke der einzelnen Anoden- oder Kathoden-Lage vorgesehen und eingerichtet. Bei einer Variante sind der erste und/oder der zweite Bildaufnehmer zwischen der Übergabestelle und der Abgabestelle auf den ersten bzw. zweiten Eck-Bereich des Aufnehmers zum Zeitpunkt des ersten bzw. zweiten Bildeinzugs unter einem Winkel von etwa 30° bis etwa 150°, oder unter einem Winkel von etwa 60° bis etwa 120°, unter einem Winkel von etwa 80° bis etwa 100°, oder unter einem Winkel von etwa 90°, zur Oberfläche des Aufnehmers im jeweiligen Bereich, ausgerichtet.

Bei einer Variante sind der erste und/oder der zweite Bildaufnehmer zur Fokussierung entlang ihrer optischen Achsen einstellbar und/oder im Betrieb verfahrbar. Bei einer Variante sind eine dem ersten und/oder dem zweiten Bildaufnehmer zugeordnete Weißlichtquelle dazu bestimmt und eingerichtet, die Anoden-/Kathoden-Lage für einen Bildeinzug durch den ersten und/oder den zweiten Bildaufnehmer zu erhellen. Bei einer Variante sind dem ersten und/oder dem zweiten Bildaufnehmer jeweils wenigstens ein optisch wirksames Element zugeordnet; wobei das optisch wirksame Element dazu bestimmt und eingerichtet ist, an einer oder mehreren Stellen oder Bereichen die Position und/oder Orientierung der Anoden-/Kathoden-Lage vor oder bei ihrem Eintreffen an der Abgabestelle oder auf dem Weg zu der Abgabestelle zu erfassen; und/oder wobei das wenigstens eine optisch wirksame Element eine Linse, oder Linsenanordnung, ein Spiegel oder eine Spiegelanordnung, ein Prisma oder eine Prismenanordnung, eine Lichtleiteranordnung, ein Flächen-Licht, ein koaxiales Ring-Licht, ein Dunkelfeld-Licht, oder Kombinationen davon ist.

Bei einer Variante ist die Steuereinheit dazu bestimmt und eingerichtet, aus dem Bildeinzug oder den Bildeinzügen Korrekturwerte zu ermitteln aus der Position und/oder Orientierung der Anoden-/Kathoden-Lage vor deren Aufnehmen durch den Stapeltisch, der Position und/ oder Orientierung des Stapeltisches, und/oder der Position und/oder Orientierung der aufgenommenen einzelnen Anoden-/Kathoden-Lage relativ zum Stapeltisch während des Wendens der Anoden-/Kathoden-Lage zum Stapeltisch. Bei einer Variante ist die Steuereinheit dazu bestimmt und eingerichtet, diese Korrekturwerte beim Ausrichten des Stapeltisches mit der transportierten Anoden-/Kathoden-Lage relativ zur Ablagestelle in Stell-Befehlen an den Lagenwender, den Aufnehmer und/oder den Stapeltisch zu berücksichtigen. Bei einer Variante ist die Steuereinheit dazu bestimmt und eingerichtet, diese Korrekturwerte für die Ausrichtung und den Ort des Stapeltisches beim Aufnehmen der Anoden-/Kathoden-Lage in Stell-Befehlen an den Lagenwender, den Aufnehmer und/oder den Stapeltisch derart zu berücksichtigen, dass der Stapeltisch die jeweilige Anoden-/Kathoden-Lage in einer mittigen Null-Position und/oder zum an der Abgabestelle befindlichen Elektroden-Stapel fluchtend ausgerichtet aufnimmt. Bei einer Variante ist die Steuereinheit dazu bestimmt und eingerichtet, durch Überprüfung der Position der ankommenden Anoden-/Kathoden-Lage in den Bildeinzügen unmittelbar vor der Abgabestelle die Ausrichtung und den Ort des Stapeltisches beim oder vor dem Aufnehmen der Anoden-/Kathoden-Lage zu bestimmen.

Bei einer Variante ist der Aufnehmer relativ zu seiner Rotationsachse radial verfahrbar, und der erste Bildaufnehmer und/oder der zweite Bildaufnehmer ist zu einem ersten bzw. zweiten Bildeinzug eingerichtet, wenn sich der Aufnehmer radial nach außen oder innen bewegt.

Eine Variante eines Inspektionsverfahrens bei der Herstellung von Modulen oder Vorstufen von Modulen umfasst die Schritte: Aufnehmen einer Anoden-/Kathoden-Lage von einer Übergabestelle; Bringen der Anoden-/Kathoden-Lage von der Übergabestelle zu einer Abgabestelle; Erfassen von Position und/oder Orientierung der Anoden-/Kathoden-Lage an dem Lagen-Wender mittels eines ersten Bildaufnehmers zwischen der Übergabestelle und der Abgabestelle, wobei der erste Bildaufnehmer auf einen ersten Bereich des Lagen-Wenders ausgerichtet und zu einem ersten Bildeinzug vorgesehen und eingerichtet ist, wenn die Anoden-/Kathoden-Lage an dem Lagen-Wender den ersten Bildaufnehmer passiert.

Bei einer Variante des Inspektionsverfahrens erfolgt ein Erfassen von Position und/oder Orientierung der Anoden-/Kathoden-Lage an dem Lagen-Wender mittels eines zweiten Bildaufnehmers zwischen der Übergabestelle und der Abgabestelle, wobei der zweite Bildaufnehmer auf einen zweiten Bereich des Lagen-Wenders ausgerichtet und zu einem zweiten Bildeinzug vorgesehen und eingerichtet ist, wenn der wenigstens eine Aufnehmer des Lagen-Wenders den zweiten Bildaufnehmer passiert. Bei einer Variante des Inspektionsverfahrens erfolgt ein Ausrichten des Aufnehmers und des Stapeltisches relativ zueinander in Abhängigkeit von einer Signalisierung basierend auf einer Verarbeitung des ersten und/oder zweiten Bildeinzugs. Bei einer Variante des Inspektionsverfahrens erfolgt ein Abgeben der jeweiligen einzelnen Anoden- oder Kathoden-Lage von dem jeweiligen wenigstens einen Aufnehmer an der Abgabestelle auf den Stapeltisch zur Bildung eines Lagen-Stapels, wenn sich der jeweilige wenigstens eine Aufnehmer an der Abgabestelle befindet.

Bei einer Variante des Inspektionsverfahrens erfassen der erste und/oder der zweite Bildaufnehmer in senkrechter, ± etwa 25°, - Draufsicht (bezogen auf die Fläche der Anoden-/Kathoden-Lage) auf die Anoden-/Kathoden-Lage deren Position und/oder Orientierung in x, y, z, und/oder theta, wenn der wenigstens eine Aufnehmer des Lagen-Wenders den jeweiligen Bildaufnehmer passiert. Bei einer Variante des Inspektionsverfahrens erhellt eine dem ersten und/oder dem zweiten Bildaufnehmer zugeordnete Lichtquelle die Anoden-/Kathoden-Lage für einen Bildeinzug durch den ersten und/oder den zweiten Bildaufnehmer. Bei einer Variante des Inspektionsverfahrens erfassen der erste und/ oder der zweite Bildaufnehmer mit einem Bildeinzug die Anoden-/Kathoden-Lage vollständig, um deren Position und/oder Orientierung in x, y, z, und/oder theta zu erfassen. Bei einer Variante des Inspektionsverfahrens erfassen der erste und/oder der zweite Bildaufnehmer relativ zu einem jeweiligen festgelegten Bildaufnehmer-Nullpunkt mit einem einzigen Bildeinzug einen Bereich, wenigstens einen Eck-Bereich, zwei diagonale Eck-Bereiche, und/oder wenigstens einen Eck-Bereich und zumindest einen Abschnitt einer Kante der Anoden-/Kathoden-Lage, um die Position und/ oder Orientierung in x, y, z, und/oder theta der Anoden-/Kathoden-Lage zu erfassen. Bei einer Variante des Inspektionsverfahrens sind der erste und/oder der zweite Bildaufnehmer als Matrixkamera oder als Zeilenkamera ausgestaltet, die die Position und/oder Orientierung in x, y, z, und/oder theta der Anoden-/Kathoden-Lage vor oder bei ihrem Eintreffen an der Abgabestelle oder auf dem Weg zu der der Abgabestelle erfassen.

Bei einer Variante des Inspektionsverfahrens werden Korrekturwerte aus der Position und/ oder Orientierung in x, y, z, und/oder theta der Anoden-/Kathoden-Lage nach deren Aufnehmen durch den wenigstens einen Aufnehmer des Lagen-Wenders, der Position und/oder Orientierung in x, y, z, und/oder theta des Stapeltisches, und/oder der Position und/oder Orientierung in x, y, z, und/oder theta der aufgenommenen einzelnen Anoden-/Kathoden-Lage während eines Wendens der Anoden-/Kathoden-Lage zu dem Stapeltisch ermittelt. Bei einer Variante des Inspektionsverfahrens werden diese Korrekturwerte beim Ausrichten in x, y, z, und/oder theta des Aufnehmers des Lagen-Wenders mit der transportierten Anoden-/Kathoden-Lage relativ zum Stapeltisch an der Abgabestelle berücksichtigt. Bei einer Variante des Inspektionsverfahrens werden diese Korrekturwerte in x, y, z, und/ oder theta beim Ausrichten des Aufnehmers des Lagen-Wenders derart berücksichtigt, dass die Anoden-/Kathoden-Lage in einer mittigen Null-Position und/oder fluchtend ausgerichtet von dem Stapeltisch aufgenommen werden.

Mit der hier vorgeschlagenen ersten Art der Inspektion bei der Zellenfertigung mit den ersten und zweiten Bildaufnehmern (Kameras) mittels der ersten und zweiten Bildaufnehmer werden die Elektroden-Lagen möglichst exakt aufeinandergestapelt. So ist ein möglichst hoher Wirkungsgrad der fertigen Brennstoff- oder Batterie-Zellen zu erzielen. Je ungenauer die Elektroden-Lagen aufeinandergestapelt sind, umso niedriger wird der Wirkungsgrad. Durch die hier vorgeschlagene Inspektion wird die genaue Position der Elektroden-Lage (während des Wendens, also) unmittelbar vor dem Abstapeln erfasst. Aus dieser Position wird ein Maß zur Korrektur der Relativ-Position zwischen dem Stapeltisch und dem Aufnehmer des Lagen-Wenders bestimmt und angewendet. So wird die Genauigkeit der Ablage der einzelnen Elektroden-Lage auf dem wachsenden Stapel möglichst präzise. Dieses Vorgehen vermeidet Produktions-Ausschuss, und höhere Wirkungsgrade der fertigen Brennstoff- oder Batterie-Zellen können erzielt werden.

In einer Variante sind der erste und der zweite Eck-Bereich der inspizierten Elektrode bzw. des Lagen-Wenders unterschiedlich. In einer Variante ist ein Stapeltisch dazu vorgesehen und dazu eingerichtet, an der ersten Abgabestelle die jeweilige einzelne Anoden- oder Kathoden-Lage zur Bildung eines Lagen-Stapels aufzunehmen.

In einer Variante sind der erste Eck-Bereich und der zweite Eck-Bereich des ersten Lagen-Wenders diagonal zueinander liegende Bereiche des ersten Lagen-Wenders. Der erste Eck-Bereich und der zweite Eck-Bereich sind in einer Variante zwei (etwa gleich große) Flächenbereiche des wenigstens einen Aufnehmers des ersten LagenWenders, wenn dieser Aufnehmer sich auf dem Weg zwischen der ersten Übergabestelle und der ersten Abgabestelle befindet.

In einer Variante sind der erste Eck-Bereich und der zweite Eck-Bereich des wenigstens einen Aufnehmers des ersten Lagen-Förderers zum Aufnehmen einer ersten Ecke bzw. zweiten Ecke der einzelnen Anoden- oder Kathoden-Lage vorgesehen und eingerichtet.

In einer Variante sind der erste und/oder zweite Bildaufnehmer zwischen der ersten/zweiten Übergabestelle und der ersten/zweiten Abgabestelle auf den ersten bzw. zweiten Eck-Bereich des ersten/zweiten Lagen-Förderers zum Zeitpunkt des ersten und/oder zweiten Bildeinzugs unter einem Winkel von etwa 25° bis etwa 150°, oder unter einem Winkel von etwa 60° bis etwa 120°, oder unter einem Winkel von etwa 80° bis etwa 100°, oder unter einem Winkel von etwa 90° (bezogen auf die Fläche der Anoden-/Kathoden-Lage bzw. des ersten/zweiten Aufnehmers) ausgerichtet.

In Varianten der Inspektion erfassen die erste und/oder die zweite Kamera in senkrechter, ± etwa 25° bis etwa ± 30° -, Draufsicht auf die Anoden-/Kathoden-Lage, deren Position und/ oder Orientierung auf dem jeweiligen Aufnehmer (bezogen auf die Fläche der Anoden-/Kathoden-Lage bzw. des ersten/zweiten Aufnehmers), wenn dieser den jeweiligen Bildaufnehmer passiert. In Varianten der Inspektion sind der erste und/oder der zweite Bildaufnehmer zur Fokussierung entlang ihrer optischen Achsen einstellbar und/oder im Betrieb verfahrbar.

In Varianten der Inspektion erhellen eine dem ersten und/oder dem zweiten Bildaufnehmer zugeordnete Weißlichtquelle die Anoden-/Kathoden-Lage für einen Bildeinzug durch den ersten bzw. zweiten Bildaufnehmer. In Varianten der Inspektion erfassen die erste und/oder die zweite Kamera mit einem (einzigen) Bildeinzug die Anoden-/Kathoden-Lage vollständig, um deren Position und/oder Orientierung zu erfassen.

In Varianten des Inspektionsverfahrens erfassen die erste und/ oder die zweite Kamera mit einem einzigen Bildeinzug einen Bereich, wenigstens einen Eck-Bereich, zwei diagonale Eck-Bereiche, und/ oder wenigstens einen Eck-Bereich und zumindest einen Abschnitt einer Kante der Anoden-/Kathoden-Lage, um die Position und/oder Orientierung der Anoden-/Kathoden-Lage zu erfassen.

In Varianten der Inspektion sind die erste und/oder die zweite Kamera als Matrixoder als Zeilenkamera ausgestaltet, die die Position und/oder Orientierung der Anoden-/Kathoden-Lage während des Wendens zu dem Stapeltisch hin erfassen.

In Varianten der Inspektion werden Korrekturwerte ermittelt aus der Position und/oder Orientierung der Anoden-/Kathoden-Lage an dem Aufnehmer während des Wendens der Anoden-/Kathoden-Lage zu der Abgabestelle hin auf dem Stapeltisch. Diese Korrekturwerte werden in Varianten der Inspektion beim Ausrichten des Stapeltisches relativ zum Aufnehmer mit der transportierten Anoden-/Kathoden-Lage an der Ablagestelle berücksichtigt.

In Varianten der Inspektion werden diese Korrekturwerte beim Ausrichten des Stapeltisches für das Aufnehmen der Anoden-/Kathoden-Lage durch den Stapeltisch derart berücksichtigt, dass die Anoden-/Kathoden-Lage in einer mittigen Null-Position und/oder fluchtend ausgerichtet von dem Stapeltisch aufgenommen wird.

Bei der Inspektion kann, in einer Variante, mit den berechneten Korrekturwerten die Stapelvorrichtung relativ zur Anoden-/Kathoden-Lage vor/bei deren Ablegen auf dem Stapeltisch so positioniert werden, dass die Anoden-/Kathoden-Lage von dem Stapeltisch in einer Nullstellung positioniert aufgenommen wird. Dazu kann der Stapeltisch in seiner Position und/ oder Orientierung zur Anoden-/Kathoden-Lage / zu dem Lagen-Förderer an der Abgabestelle korrigiert werden. Gleichermaßen kann nach dem Aufnehmen während des Transports entsprechend der Korrekturwerte aus dem Bildeinzug der Stapeltisch so positioniert werden, dass die Anoden-/Kathoden-Lage von dem Stapeltisch beim Ablegen an der Abgabestelle auf dem dort befindlichen Elektroden-Stapel die Anoden-/Kathoden-Lage passend und mit minimaler oder keiner weiteren Korrekturbewegung abgelegt wird. Dies ist sehr schnell und mit hoher Präzision ausführbar. Zur Inspektion ist zum Beispiel eine nachstehend erläuterte Vorrichtung geeignet.

In Varianten der Inspektion sind eine der oder den Kamera(s) zugeordnete (Weiß-)Lichtquellen dazu bestimmt und eingerichtet, die Anoden-/Kathoden-Lage für einen Bildeinzug durch die jeweilige Kamera zu erhellen.

In Varianten der Inspektion ist einer oder allen Kamera(s) wenigstens ein optisch wirksames Element vorgeschaltet, dazu bestimmt und eingerichtet, um an einer oder mehreren Stellen oder Bereichen die Position und/oder Orientierung der Anoden-/Kathoden-Lage vor dem Aufnehmen durch den Aufnehmer bzw. bei ihrem Eintreffen an der Abgabestelle oder auf dem Weg zu der Abgabestelle zu erfassen. In Varianten der Vorrichtung sind das wenigstens eine optisch wirksame Element als eine Linse, oder Linsenanordnung, ein Spiegel oder eine Spiegelanordnung, ein Prisma oder eine Prismenanordnung, eine Lichtleiteranordnung, ein Flächen-Licht, ein koaxiales Ring-Licht, ein Dunkelfeld-Licht, oder Kombinationen hiervon. In Varianten der Inspektion ist eine Steuereinheit dazu bestimmt und eingerichtet, aus dem Bildeinzug und/oder Daten aus der Erfassungseinrichtung und/oder der ersten und/oder der zweiten Kamera Korrekturwerte zu ermitteln aus der Position und/oder Orientierung der Anoden-/Kathoden-Lage vor deren Aufnehmen durch den Stapeltisch, der Position und/ oder Orientierung des Stapeltisches, und/ oder der Position und/oder Orientierung der aufgenommenen einzelnen Anoden-/Kathoden-Lage relativ zum Stapeltisch während eines Wendens der Anoden-/Kathoden-Lage zum Stapeltisch.

In Varianten der Inspektion ist die Steuereinheit dazu bestimmt und eingerichtet, diese Korrekturwerte beim Ausrichten des Stapeltisches mit der transportierten Anoden-/Kathoden-Lage relativ zur Abgabestelle in Stell-Befehlen an den Lagenwender und/oder dessen Aufnehmer und/oder den Stapeltisch zu berücksichtigen. In Varianten der Inspektion ist eine Steuereinheit dazu bestimmt und eingerichtet, diese Korrekturwerte die Ausrichtung und den Ort des Stapeltisches beim Aufnehmen der Anoden-/Kathoden-Lage in Stell-Befehlen derart zu berücksichtigen, dass der Stapeltisch die jeweilige Anoden-/Kathoden-Lage in einer mittigen Null-Position und/oder zum an der Abgabestelle befindlichen Elektroden-Stapel fluchtend ausgerichtet aufnimmt.

Durch Überprüfung der Position der ankommenden Anoden-/Kathoden-Lage unmittelbar vor der Abgabestelle ist die Ausrichtung und der Ort des Stapeltisches beim oder vor dem Aufnehmen der Anoden-/Kathoden-Lage genau zu bestimmen. Dies erlaubt ein genau bestimmtes, korrigiertes Aufnehmen der Anoden-/Kathoden-Lage durch den Stapeltisch zur Bildung eines in der Hoch-Erstreckung und der Winkellage um die Hochachse exakt fluchtenden Stapels aus Elektroden-Lagen.

Eine Inspektionsvorrichtung für Lagenmaterial, insbesondere zur Herstellung von Brennstoff- oder Batterie-Zellen, umfasst in einer zweiten Variante einen ersten Lagen-Förderer, der wenigstens einen Aufnehmer und einen ersten Antrieb aufweist und dazu vorgesehen und eingerichtet ist, eine jeweilige einzelne Anoden- oder Kathoden-Lage mittels des wenigstens einen Aufnehmers von einer ersten Übergabestelle aufzunehmen, und zu einer ersten Abgabestelle zu bringen. In einer Variante ist ein Stapeltisch dazu vorgesehen und dazu eingerichtet, an der ersten Abgabestelle die jeweilige einzelne Anoden- oder Kathoden-Lage von dem Aufnehmer zur Bildung eines Lagen-Stapels aufzunehmen. In einer Variante ist der erste Lagen-Förderer dazu vorgesehen und eingerichtet, an der ersten Abgabestelle jeweils eine einzelne Anoden- oder Kathoden-Lage von ihrem Aufnehmer an den Stapeltisch abzugeben, wenn sich der Aufnehmer an der ersten Abgabestelle befindet. In einer Variante ist ein dritter Bildaufnehmer auf einen eine Oberkante eines auf dem Stapeltisch befindlichen Lagen-Stapels umfassenden Bereich in einer Seitenansicht des Lagen-Stapels gerichtet, der eine Anschluss-Fahne einer sich zuoberst auf dem LagenStapel befindlichen Anoden- oder Kathoden-Lage umfasst, und zu einem dritten Bildeinzug vorgesehen und eingerichtet ist, bevor und/oder nachdem die Anoden- bzw. Kathoden-Lage auf dem Stapel-Tisch abgelegt ist. In einer Variante ist eine Steuerung dazu vorgesehen und eingerichtet, in Abhängigkeit von einer Signalisierung basierend auf einer Verarbeitung des dritten Bildeinzugs die (Un-)Brauchbarkeit des Lagen-Stapels anzugeben. Hierauf kann ein (automatisiertes) Entfernen des Stapels erfolgen.

Der Lagen-Förderer umfasst in einer Variante einen Lagen-Wender, der dazu vorgesehen und eingerichtet ist, eine jeweilige einzelne Anoden- oder Kathoden-Lage mittels des wenigstens einen Aufnehmers von der ersten Übergabestelle aufzunehmen und um einen jeweiligen Rotationswinkel zu einer ersten Abgabestelle zu drehen.

Der Lagen-Förderer umfasst in einer weiteren Variante einen Lagen-Greifer, der dazu vorgesehen und eingerichtet ist, eine jeweilige einzelne Anoden- oder Kathoden-Lage mittels des einen Aufnehmers, zum Beispiel in Gestalt eines Saug- oder Greifwerkzeugs, von der ersten Übergabestelle aufzunehmen und zu der ersten Abgabestelle zu bringen.

Die Inspektionsvorrichtung umfasst in einer weiteren Variante einen zweiten Lagen-Förderer, der dazu vorgesehen und eingerichtet ist, eine einzelne Kathoden- oder Anoden-Lage aufzunehmen und zu einer zweiten Abgabestelle zu bringen. In einer Variante ist dem Stapeltisch ein Antrieb zugeordnet, der dazu vorgesehen und dazu eingerichtet ist, den Stapeltisch zwischen der ersten und der zweiten Abgabestelle hin- und her zu fahren. In einer Variante sind der erste und der zweite Lagen-Förderer jeweils dazu vorgesehen und eingerichtet, an der ersten bzw. der zweiten Abgabestelle jeweils eine einzelne Anoden- oder Kathoden-Lage an den Stapeltisch an der ersten bzw. der zweiten Abgabestelle abzugeben. In einer Variante ist wenigstens ein Antrieb vorgesehen, um den jeweiligen Lagen-Förderer und/ oder einen jeweiligen wenigstens einen Lagen-Wender oder Lagen-Greifer relativ zu dem Stapeltisch in Abhängigkeit von einer Signalisierung basierend auf einer Verarbeitung des ersten und/ oder zweiten Bildeinzugs in einer Steuerung auszurichten.

In einer Variante umfasst der zweite Lagen-Förderer einen Lagen-Wender, der dazu vorgesehen und eingerichtet ist, eine jeweilige einzelne Anoden- oder Kathoden-Lage mittels des wenigstens einen Aufnehmers von der zweiten Übergabestelle aufzunehmen und um einen jeweiligen Rotationswinkel zu einer zweiten Abgabestelle zu drehen.

In einer Variante umfasst der zweite Lagen-Förderer einen Lagen-Greifer, der dazu vorgesehen und eingerichtet ist, eine jeweilige einzelne Anoden- oder Kathoden-Lage mittels eines Aufnehmers, zum Beispiel in Gestalt eines Saug- oder Greifwerkzeugs, von der zweiten Übergabestelle aufzunehmen, und zu der zweiten Abgabestelle zu bringen.

In einer Variante umfassen ein erster dritter Bereich und ein zweiter dritter Bereich des Lagenstapels jeweils eine Anschluss-Fahne der jeweils obersten Anoden- oder Kathoden-Lage auf dem Stapeltisch an der ersten bzw. der zweiten Abgabestelle. In einer Variante sind einer oder zwei dritte Bildaufnehmer auf einer ersten Seite der Inspektionsvorrichtung angeordnet, und einer oder zwei dritte Bildaufnehmer auf einer zweiten Seite der Inspektionsvorrichtung angeordnet. In einer Variante sind einer oder mehrere dritte Bildaufnehmer ortsfest relativ zu dem verfahrbaren Stapeltisch angeordnet. In einer Variante sind einer oder mehrere dritte Bildaufnehmer mit dem Stapeltisch verbunden, um mit diesem verfahrbar zu sein.

In einer Variante der Inspektionsvorrichtung ist der wenigstens eine dritte Bildaufnehmer zur Fokussierung entlang seiner optischen Achse einstellbar und/oder im Betrieb verfahrbar. In einer Variante ist eine dem dritten Bildaufnehmer zugeordnete Lichtquelle dazu bestimmt und eingerichtet, die Anoden-/Kathoden-Lage für einen Bildeinzug durch den dritten Bildaufnehmer zu erhellen. In einer Variante ist dem wenigstens einen dritten Bildaufnehmer wenigstens ein optisch wirksames Element zugeordnet. In einer Variante ist das optisch wirksame Element dazu bestimmt und eingerichtet, die Anschluss-Fahne einer sich zuoberst auf dem Lagen-Stapel befindlichen Anoden- oder Kathoden-Lage in dem dritten Bildeinzug erkennbar zu machen, nachdem die Anoden- bzw. Kathoden-Lage auf dem Lagen-Stapel abgelegt ist. In einer Variante ist das wenigstens eine optisch wirksame Element eine Linse, oder Linsenanordnung, ein Spiegel oder eine Spiegelanordnung, ein Prisma oder eine Prismenanordnung, eine Lichtleiteranordnung, ein Flächen-Licht, eine koaxiale Ring-Beleuchtung, eine Dunkelfeld-Beleuchtung, eine Durchlicht-Beleuchtung, oder eine Kombination davon.

Bei der Durchlicht-Beleuchtung ist das Licht zur Blickrichtung des Bildaufnehmers entgegengesetzt. Das Licht geht dabei nicht durch das Material der Anschluss-Fahne hindurch, wie es z.B. bei einem Halbleiterchip mit IR-Licht der Fall ist.

In einer Variante der Inspektionsvorrichtung ist die Durchlicht-Beleuchtung auf der gegenüber liegenden Seite des dritten Bildaufnehmers jenseits der Position der Anschluss-Fahne auf dem Stapeltisch angeordnet und dazu eingerichtet, die Anschluss-Fahne in den Lichtstrahlengang zu nehmen. Damit ist mittels einer Verarbeitung des dritten Bildeinzugs ein Abheben der Anschluss-Fahne zu erkennen, indem in dem Bildeinzug die oberste Kante der Anschluss-Fahne nicht im Wesentlichen waagrecht (< ± 10° relativ zur Horizontalen oder zur optischen Achse des jeweiligen dritten Bildaufnehmers), oder plan mit der Elektrode orientiert und/oder eine Störkontur verursacht.

In einer Variante der Inspektionsvorrichtung ist die koaxiale Ring-Beleuchtung auf der Seite des dritten Bildaufnehmers diesseits der Position der Anschluss-Fahne auf dem Stapeltisch angeordnet und dazu eingerichtet, die Anschluss-Fahne in den Lichtstrahlengang zu nehmen, um mittels einer Verarbeitung des dritten Bildeinzugs ein Abheben der Anschluss-Fahne zu erkennen, indem in dem Bildeinzug die oberste Kante der Anschluss-Fahne nicht (< ± 10° relativ zur Horizontalen oder zur optischen Achse des jeweiligen dritten Bildaufnehmers), oder plan mit der Elektrode orientiert und/oder eine Störkontur verursacht.

Ein zweites Inspektionsverfahren bei der Herstellung von Modulen oder Vorstufen von Modulen umfasst die Schritte: Aufnehmen einer Anoden-/Kathoden-Lage an einer ersten Übergabestelle und Bringen der Anoden- oder Kathoden-Lage von der ersten Übergabestelle zu einer ersten Abgabestelle; Abgeben der jeweiligen einzelnen Anoden- oder Kathoden-Lage an der Abgabestelle auf einen Stapeltisch zur Bildung eines Lagen-Stapels; Richten eines dritten Bildaufnehmers auf einen eine Oberkante eines auf dem Stapeltisch befindlichen Lagen-Stapels umfassenden Bereich in einer Seitenansicht, wobei der Bereich eine Anschluss-Fahne einer sich zuoberst auf dem Lagen-Stapel befindlichen Anoden- oder Kathoden-Lage umfasst; und wobei mittels des dritten Bildaufnehmers ein dritter Bildeinzug vorgenommen wird, nachdem die Anoden- bzw. Kathoden-Lage auf dem Stapel-Tisch abgelegt ist; und Angeben einer (Un-)Brauchbarkeit des Lagen-Stapels in Abhängigkeit von einer Signalisierung basierend auf einer Verarbeitung des dritten Bildeinzugs.

In einer Variante umfasst das Inspektionsverfahren weiterhin die Schritte: Einstellen des wenigstens einen dritten Bildaufnehmers zur Fokussierung entlang seiner optischen Achse und/oder Verfahren des wenigstens einen dritten Bildaufnehmers zur Fokussierung entlang seiner optischen Achse im Betrieb; und/oder Erhellen der Anoden-/Kathoden-Lage für einen dritten Bildeinzug durch den wenigstens einen dritten Bildaufnehmer mittels einer dem wenigstens einen dritten Bildaufnehmer zugeordneten Lichtquelle; und/oder Zuordnen wenigstens eines optisch wirksamen Elements dem wenigstens einen dritten Bildaufnehmer; wobei das optisch wirksame Element dazu bestimmt und eingerichtet ist, in einer Seitenansicht die Anschluss-Fahne einer sich zuoberst auf dem Lagen-Stapel befindlichen Anoden- oder Kathoden-Lage in dem dritten Bildeinzug erkennbar zu machen, nachdem die Anoden- bzw. Kathoden-Lage auf dem Lagen-Stapel abgelegt ist; und/oder wobei das wenigstens eine optisch wirksame Element eine Linse, oder Linsenanordnung, ein Spiegel oder eine Spiegelanordnung, ein Prisma oder eine Prismenanordnung, eine Lichtleiteranordnung, ein Flächen-Licht, eine koaxiale Ring-Beleuchtung, eine Dunkelfeld-Beleuchtung, eine Durchlicht-Beleuchtung, oder eine Kombination davon ist.

Das Inspektionsverfahren umfasst in einer Variante weiterhin die Schritte: Anordnen der Durchlicht-Beleuchtung auf der gegenüber liegenden Seite des wenigstens einen dritten Bildaufnehmers, jenseits der Position der Anschluss-Fahne auf dem Stapeltisch, und dazu Einrichten des wenigstens einen dritten Bildaufnehmers, die Anschluss-Fahne in den Lichtstrahlengang zu nehmen; um mittels einer Verarbeitung des dritten Bildeinzugs ein Abheben der Anschluss-Fahne zu erkennen, in dem sich die oberste Kante der Anschluss-Fahne nicht (< ± 10° relativ zur Horizontalen oder zur optischen Achse des jeweiligen dritten Bildaufnehmers), oder plan mit der Elektrode orientiert und/oder eine Störkontur verursacht.

Das Inspektionsverfahren umfasst in einer Variante weiterhin die Schritte: Anordnen der koaxialen Ring-Beleuchtung auf der Seite des wenigstens einen dritten Bildaufnehmers, diesseits der Position der Anschluss-Fahne auf dem Stapeltisch, und dazu Einrichten des wenigstens einen dritten Bildaufnehmers, die Anschluss-Fahne in den Lichtstrahlengang zu nehmen; Erkennen, mittels einer Verarbeitung des dritten Bildeinzugs, ein Abheben der Anschluss-Fahne, indem in dem dritten Bildeinzug die oberste Kante der Anschluss-Fahne nicht waagrecht (< ± 10° relativ zur Horizontalen oder zur optischen Achse des jeweiligen dritten Bildaufnehmers), oder plan mit der Elektrode orientiert und/oder eine Störkontur verursacht.

Mit der hier vorgeschlagenen weiteren, zweiten Inspektion bei der Zellenfertigung mit dem wenigstens einen dritten Bildaufnehmer (Kamera) wird auch die möglichst ebenflächige Ausrichtung der Anschluss-Fahne der obersten Elektroden-Lage zu der/den darunterliegenden Anschluss-Fahne/n kontrolliert.

Diese weitere Inspektion ist alternativ oder zusätzlich zu der ersten Inspektion zu verwirklichen. So ist ein möglicher Ausfall oder Wirkungsgrad-Verlust der fertigen Brennstoff- oder Batterie-Zellen zu vermeiden. Beim Stapeln einer Elektroden-Lage kommt es nämlich auch vor, dass sich deren Anschluss-Fahne aufstellt, aufwölbt oder aufbiegt und dadurch die Gefahr entsteht, dass sie, zum Beispiel auch beim Aufstapeln der nächsten Elektroden-Lage derselben Polarität, geknickt werden. Wenn die Anschluss-Fahnen nicht vollflächig aufeinander verbunden werden, sinkt die Effizienz der Brennstoff- oder Batterie-Zelle. Falls eine Anschluss-Fahne über die TrennFolie gebogen ist und mit der Gegen-Elektroden-Lage in Berührung kommt, kann dies einen Kurzschluss der Zelle verursachen. Durch die hier vorgeschlagene Inspektion wird die genaue Orientierung der Anschluss-Fahnen jeder Elektroden-Lage unmittelbar nach dem Abstapeln erfasst. Aus dieser Position wird ein Maß zur Korrektur der Relativ-Position zwischen dem Stapeltisch und dem Aufnehmer des LagenWenders bestimmt und angewendet. So wird die Genauigkeit der Ablage der einzelnen Elektroden-Lage auf dem wachsenden Stapel möglichst präzise zu dem bereits auf dem Stapeltisch befindlichen Elektroden-Stapel. So kann weniger Ausschuss produziert und ein höherer Wirkungsgrad erzielt werden.

Eine weitere, dritte Inspektion der Zellenfertigung umfasst, zum Beispiel in folgender Reihenfolge, die Schritte: Bereitstellen einer vereinzelten Anoden-/Kathoden-Lage; Fördern der Anoden-/Kathoden-Lage zu einer Abgabestelle; Abstapeln der geförderten Anoden-/Kathoden-Lage an der Abgabestelle auf einen Stapeltisch; Erfassen eines um die abgestapelte Anoden-/Kathoden-Lage an der Abgabestelle angewachsenen Elektroden-Stapels in wenigstens einer Seitenansicht einer Ecke und/oder einer Hochkante des Elektroden-Stapels an der Abgabestelle; und Überprüfen der Ausrichtung und/oder Position der oder jeder abgestapelten Anoden-/Kathoden-Lage relativ zum übrigen an der Abgabestelle angewachsenen Elektroden-Stapel.

Dies ist mit einer Inspektionsvorrichtung für Lagenmaterial insbesondere zur Herstellung von Brennstoff- oder Batterie-Zellen in einer dritten Variante zu erreichen, bei der: ein erster Lagen-Förderer dazu vorgesehen und eingerichtet ist, eine jeweilige einzelne Anoden- oder Kathoden-Lage aufzunehmen und zu einer ersten Abgabestelle zu bringen; ein Stapeltisch dazu vorgesehen und dazu eingerichtet ist, an der ersten Abgabestelle die jeweilige einzelne Anoden- oder Kathoden-Lage zur Bildung eines Lagen-Stapels aufzunehmen; der erste Lagen-Förderer dazu vorgesehen und eingerichtet ist, an der ersten Abgabestelle jeweils eine einzelne Anoden- oder Kathoden-Lage an den Stapeltisch abzugeben; und ein vierter Bildaufnehmer auf einen vierten Bereich des Lagen-Stapels aus Anoden- und Kathoden-Lagen in einer flächigen Seitenansicht des Lagen-Stapels ausgerichtet und zum Bildeinzug vorgesehen und eingerichtet ist, nachdem die Anoden- oder Kathoden-Lage auf dem Lagen-Stapel auf dem Stapel-Tisch abgelegt ist, wobei der vierte Bereich eine Ecke einer sich zuoberst auf dem Lagen-Stapel befindlichen Anoden- oder Kathoden-Lage und/oder eine Hochkante des Lagen-Stapels umfasst; und/oder ein fünfter Bildaufnehmer auf einen fünften Bereich des Lagen-Stapels aus Anoden- und Kathoden-Lagen in einer flächigen Seitenansicht des Lagen-Stapels ausgerichtet und zum Bildeinzug vorgesehen und eingerichtet ist, nachdem die Anoden- oder Kathoden-Lage auf dem LagenStapel auf dem Stapel-Tisch abgelegt ist, wobei der fünfte Bereich eine Ecke einer sich zuoberst auf dem Lagen-Stapel befindlichen Anoden- oder Kathoden-Lage und/oder eine Hochkante des Lagen-Stapels umfasst; der vierte Bereich bzw. der fünfte Bereich der Anoden- oder Kathoden-Lage in der Lagen-Fläche benachbart oder diagonal zueinander liegende Bereiche des Lagen-Stapels aus Anoden- und Kathoden-Lagen in einer jeweiligen Seitenansicht des Lagen-Stapels umfassen.

Der vierte und der fünfte Bereich sind in einer Variante voneinander verschiedene Regionen des Lagen-Stapels auf dem Stapel-Tisch.

In einer Variante umfasst der Lagen-Förderer einen Lagen-Wender, der dazu vorgesehen und eingerichtet ist, eine jeweilige einzelne Anoden- oder Kathoden-Lage mittels wenigstens eines Aufnehmers von der ersten Übergabestelle aufzunehmen und um einen jeweiligen Rotationswinkel zu der ersten Abgabestelle zu drehen.

In einer Variante umfasst der Lagen-Förderer einen Lagen-Greifer, der dazu vorgesehen und eingerichtet ist, eine jeweilige einzelne Anoden- oder Kathoden-Lage mittels eines Aufnehmers, zum Beispiel in Gestalt eines Saug- oder Greifwerkzeugs, von der ersten Übergabestelle aufzunehmen, und zu der ersten Abgabestelle zu bringen.

In einer Variante sind der vierte Bildaufnehmer und/oder der fünfte Bildaufnehmer zur Fokussierung entlang ihrer optischen Achse einstellbar und/oder im Betrieb verfahrbar. In einer Variante ist eine dem vierten Bildaufnehmer und/oder dem fünften Bildaufnehmer jeweils zugeordnete Lichtquelle dazu bestimmt und eingerichtet, die Anoden-/Kathoden-Lage für einen vierten Bildeinzug bzw. einen fünften Bildeinzug durch den vierten Bildaufnehmer bzw. fünften Bildaufnehmer zu erhellen. In einer Variante ist dem vierten Bildaufnehmer bzw. fünften Bildaufnehmer wenigstens ein optisch wirksames Element zugeordnet. In einer Variante ist das optisch wirksame Element dazu bestimmt und eingerichtet, die Ecke der sich zuoberst auf dem LagenStapel befindlichen Anoden- oder Kathoden-Lage und/oder die Hochkante des LagenStapels in dem vierten Bildeinzug bzw. dem fünften Bildeinzug erkennbar zu machen, nachdem die Anoden- bzw. Kathoden-Lage auf dem Lagen-Stapel abgelegt ist. In einer Variante ist das wenigstens eine optisch wirksame Element eine Linse, oder Linsenanordnung, ein Spiegel oder eine Spiegelanordnung, ein Prisma oder eine Prismenanordnung, eine Lichtleiteranordnung, ein Flächen-Licht, eine koaxiale Ring-Beleuchtung, eine Dunkelfeld-Beleuchtung, eine Durchlicht-Beleuchtung, oder eine Kombination davon.

In einer Variante ist die Durchlicht-Beleuchtung auf der gegenüber liegenden Seite des vierten Bildaufnehmers bzw. des fünften Bildaufnehmers, jenseits der Position der Ecke der sich zuoberst auf dem Lagen-Stapel befindlichen Anoden- oder Kathoden-Lage und/oder der Hochkante des Lagen-Stapels angeordnet, und dazu eingerichtet, die Ecke und/oder die Hochkante in den Lichtstrahlengang zu nehmen. In einer Variante ist mittels einer Verarbeitung des vierten Bildeinzugs bzw. des fünften Bildeinzugs ein Abheben, Versetzen oder Verdrehen der Anoden- bzw. Kathoden-Lage zu erkennen, indem in dem Bildeinzug die Ecke und/oder die Hochkante der zuoberst auf dem Lagen-Stapel befindlichen Anoden- oder Kathoden-Lage eine Störkontur verursacht.

In einer Variante ist die koaxiale Ring-Beleuchtung auf der Seite des vierten Bildaufnehmers bzw. des fünften Bildaufnehmers diesseits der Position der Ecke der sich zuoberst auf dem Lagen-Stapel befindlichen Anoden- oder Kathoden-Lage und/oder der Hochkante des Lagen-Stapels angeordnet, und dazu eingerichtet, die Ecke und/oder die Hochkante in den Lichtstrahlengang zu nehmen. In einer Variante ist mittels einer Verarbeitung des vierten Bildeinzugs bzw. des fünften Bildeinzugs ein Abheben, Versetzen oder Verdrehen der Anoden- bzw. Kathoden-Lage zu erkennen, indem in dem Bildeinzug die Ecke und/oder die Hochkante eine Störkontur verursacht.

In einer Variante umfassen ein erster vierter Bereich und ein erster fünfter Bereich des Lagenstapels jeweils eine Ecke einer ersten, im Wesentlichen horizontal orientierten, Kante der sich zuoberst auf dem Lagen-Stapel befindlichen Anoden- oder Kathoden-Lage und/oder einer Hochkante des Lagen-Stapels auf dem Stapeltisch und,/oder ein zweiter vierter Bereich und ein zweiter fünfter Bereich des Lagenstapels umfassen jeweils eine Ecke einer zweiten Kante der sich zuoberst auf dem Lagen-Stapel befindlichen Anoden- oder Kathoden-Lage und/oder einer Hochkante des Lagen-Stapels auf dem Stapeltisch. In einer Variante sind ein oder mehrere vierte bzw. fünfte Bildaufnehmer ortsfest relativ zu dem verfahrbaren Stapeltisch angeordnet. In einer Variante sind ein oder mehrere vierte bzw. fünfte Bildaufnehmer mit dem Stapeltisch verbunden, um mit diesem verfahrbar zu sein.

In einer Variante umfasst ein drittes Inspektionsverfahren bei der Herstellung von Modulen oder Vorstufen von Modulen die Schritte: Aufnehmen einer Anoden-/Kathoden-Lage mittels wenigstens eines Aufnehmers von einer Übergabestelle; Abgeben der jeweiligen einzelnen Anoden- oder Kathoden-Lage von dem jeweiligen wenigstens einen Aufnehmer an einer Abgabestelle auf einen Stapeltisch zur Bildung eines Lagen-Stapels, wenn sich der jeweilige wenigstens eine Aufnehmer an der Abgabestelle befindet; Richten eines vierten Bildaufnehmers auf einen vierten Bereich des Lagen-Stapels aus Anoden- und Kathoden-Lagen in einer flächigen Seitenansicht des Lagen-Stapels, wobei der vierte Bereich eine Ecke einer sich zuoberst auf dem Lagen-Stapel befindlichen Anoden- oder Kathoden-Lage und/oder eine Hochkante des Lagen-Stapels umfasst; und Ausführen eines vierten Bildeinzugs, nachdem die Anoden- oder Kathoden-Lage auf dem Lagen-Stapel auf dem Stapel-Tisch abgelegt wurde; und/oder Richten eines fünften Bildaufnehmers auf einen fünften Bereich des Lagen-Stapels aus Anoden- und Kathoden-Lagen in einer Seitenansicht des LagenStapels, wobei der fünfte Bereich eine Ecke einer sich zuoberst auf dem Lagen-Stapel befindlichen Anoden- oder Kathoden-Lage und/oder eine Hochkante des Lagen-Stapels umfasst; und/oder Ausführen eines fünften Bildeinzugs, nachdem die Anodenoder Kathoden-Lage auf dem Lagen-Stapel auf dem Stapel-Tisch abgelegt wurde; und/oder wobei der vierte Bereich bzw. der fünfte Bereich der Anoden- oder Kathoden-Lage in der Lagen-Fläche benachbart oder diagonal zueinander liegende Bereiche des Lagen-Stapels aus Anoden- und Kathoden-Lagen in einer jeweiligen Seitenansicht des Lagen-Stapels umfassen; und Angeben einer Brauchbarkeit des Lagen-Stapels in Abhängigkeit von einer Signalisierung basierend auf einer Verarbeitung des vierten bzw. des fünften Bildeinzugs.

In einer Variante umfasst das Inspektionsverfahren die Schritte: Einstellen des vierten bzw. des fünften Bildaufnehmers zur Fokussierung entlang seiner optischen Achse und/oder Verfahren des jeweiligen Bildaufnehmers zur Fokussierung entlang seiner optischen Achse im Betrieb. In einer Variante erfolgt ein Erhellen des vierten bzw. des fünften Bereichs für den vierten bzw. den fünften Bildeinzug durch den jeweiligen Bildaufnehmer mittels einer dem vierten bzw. dem fünften Bildaufnehmer zugeordneten Lichtquelle. In einer Variante erfolgt ein Zuordnen wenigstens eines optisch wirksamen Elements dem vierten bzw. dem fünften Bildaufnehmer, um die Ecke der sich zuoberst auf dem Lagen-Stapel befindlichen Anoden- oder Kathoden-Lage und/oder die Hochkante des Lagen-Stapels in dem vierten bzw. dem fünften Bildeinzug erkennbar zu machen, nachdem die Anoden- bzw. Kathoden-Lage auf dem Lagen-Stapel abgelegt ist. In einer Variante ist das wenigstens eine optisch wirksame Element eine Linse, oder Linsenanordnung, ein Spiegel oder eine Spiegelanordnung, ein Prisma oder eine Prismenanordnung, eine Lichtleiteranordnung, ein Flächen-Licht, eine koaxiale Ring-Beleuchtung, eine Dunkelfeld-Beleuchtung, eine Durchlicht-Beleuchtung, oder eine Kombination davon.

In einer Variante umfasst das Inspektionsverfahren die Schritte: Anordnen der Durchlicht-Beleuchtung auf der gegenüber liegenden Seite des vierten bzw. des fünften Bildaufnehmers jenseits der Position der Ecke der sich zuoberst auf dem Lagen-Stapel befindlichen Anoden- oder Kathoden-Lage und/oder der Hochkante des Lagen-Stapels auf dem Stapeltisch, und dazu Einrichten der Durchlicht-Beleuchtung, die Ecke und/oder die Hochkante des Lagen-Stapels in den Lichtstrahlengang zu nehmen. In einer Variante erfolgt mittels einer Verarbeitung des vierten bzw. des fünften Bildeinzugs ein Erkennen eines zumindest teilweisen Abhebens, Versetzens oder Verdrehens der sich zuoberst auf dem Lagen-Stapel befindlichen Anoden- oder Kathoden-Lage, indem die oberste Ecke und/oder die Hochkante eine Störkontur verursacht.

In einer Variante umfasst das Inspektionsverfahren die Schritte: Anordnen der koaxialen Ring-Beleuchtung auf der Seite des vierten bzw. des fünften Bildaufnehmers diesseits der Position der Ecke der sich zuoberst auf dem Lagen-Stapel befindlichen Anoden- oder Kathoden-Lage und/oder der Hochkante des Lagen-Stapels auf dem Stapeltisch, und dazu Einrichten der Durchlicht-Beleuchtung, die Ecke und/oder die Hochkante des Lagen-Stapels in den Lichtstrahlengang zu nehmen. In einer Variante erfolgt mittels einer Verarbeitung des vierten bzw. des fünften Bildeinzugs ein Erkennen eines zumindest teilweisen Abhebens, Versetzens oder Verdrehens der sich zuoberst auf dem Lagen-Stapel befindlichen Anoden- oder Kathoden-Lage, indem die oberste Ecke und/oder die Hochkante eine Störkontur verursacht. In einer Variante sind ein oder mehrere vierte bzw. fünfte Bildaufnehmer unter einem Winkel von etwa ± 5° bis etwa ± 25° zu einer Längs- oder Querkante der sich zuoberst auf dem Lagen-Stapel befindlichen Anoden- oder Kathoden-Lage, zum Beispiel ± 13°, orientiert.

In einer Variante umfasst das Inspektionsverfahren bei der Herstellung von Modulen oder Vorstufen von Modulen weiterhin die Schritte: Aufnehmen einer Anoden-/Kathoden-Lage mittels wenigstens eines zweiten Aufnehmers eines zweiten LagenWenders von einer zweiten Übergabestelle; Abgeben der jeweiligen einzelnen Anoden- oder Kathoden-Lage von dem jeweiligen wenigstens einen Aufnehmer an einer zweiten Abgabestelle auf den Stapeltisch zur Bildung des Lagen-Stapels, wenn sich der jeweilige zweite Aufnehmer an der Abgabestelle befindet; Richten eines vierten Bildaufnehmers auf einen vierten Bereich des Lagen-Stapels aus Anoden- und Kathoden-Lagen in einer flächigen Seitenansicht des Lagen-Stapels, wobei der vierte Bereich eine Ecke einer sich zuoberst auf dem Lagen-Stapel befindlichen Anoden- oder Kathoden-Lage und/oder eine Hochkante des Lagen-Stapels umfasst; und Ausführen eines vierten Bildeinzugs, nachdem die Anoden- oder Kathoden-Lage auf dem LagenStapel auf dem Stapel-Tisch abgelegt wurde; und/oder Richten eines fünften Bildaufnehmers auf einen fünften Bereich des Lagen-Stapels aus Anoden- und Kathoden-Lagen in einer flächigen Seitenansicht des Lagen-Stapels, wobei der fünfte Bereich eine Ecke einer sich zuoberst auf dem Lagen-Stapel befindlichen Anoden- oder Kathoden-Lage und/oder eine Hochkante (HK) des Lagen-Stapels umfasst; und Ausführen eines fünften Bildeinzugs, nachdem die Anoden- oder Kathoden-Lage auf dem Lagen-Stapel auf dem Stapel-Tisch abgelegt wurde; und/oder wobei der vierte Bereich bzw. der fünfte Bereich der Anoden- oder Kathoden-Lage in der Lagen-Fläche benachbart oder diagonal zueinander liegende Bereiche des Lagen-Stapels aus Anoden- und Kathoden-Lagen in einer jeweiligen Seitenansicht des Lagen-Stapels umfassen; und Angeben einer (Un-)Brauchbarkeit des Lagen-Stapels in Abhängigkeit von einer Signalisierung basierend auf einer Verarbeitung des vierten bzw. des fünften Bildeinzugs.

Diese weitere, dritte Inspektion ist alternativ oder zusätzlich zu der ersten und/oder der zweiten Inspektion zu verwirklichen.

Dieses Vorgehen erlaubt eine genaue Positionsbestimmung der obersten Lage im Verhältnis zu den übrigen Lagen des Elektroden-Stapels. Diese Prüfung ist mit zunehmender Höhe des Elektroden-Stapels zunehmend wichtiger, da eine fehlerhaft positionierte Ablage der obersten Lage ohne weitere Korrektur zu einem Verwerfen des Elektroden-Stapels führen muss. Dabei wird die Kontrolle mit zunehmender Höhe des Elektroden-Stapels zunehmend genauer, da die zu vermessenden geometrischen Bereiche (Ecke oder Hochkante des Elektroden-Stapels) einfacher und präziser erfasst und ausgewertet werden können.

In einer Variante der dritten Inspektion erlaubt dies auch die Berechnung genauerer Korrekturwerte bei der Ablage der nächstfolgenden Lage auf dem Elektroden-Stapel. Insgesamt erlaubt diese Vorgehensweise mit der genauen Positionsüberprüfung eine erhebliche Verminderung des Kurzschlussrisikos, zum Beispiel der Brennstoff- oder Batterie-Zellen.

Dies wird auch dadurch deutlich, dass bisherige Lösungen die Lagen lediglich mit etwa ± 0.5 mm Genauigkeit ablegen, während die hier vorgestellte Lösung zum Verringern des Ausschusses und eines besseren Wirkungsgrads eine Genauigkeit beim Ablegen der Anoden-/Kathoden-Lagen auf dem Elektroden-Stapel von ± 0.1 mm und genauer erlaubt.

In einer Variante des Verfahrens werden vier Matrixkameras verwendet, die (von der Seite gesehen) auf alle vier Ecken / (Hoch-)Kanten des Elektroden-Stapels an der Ablegestelle gerichtet werden. In einer Variante des Verfahrens wird mittels jeweiliger Lichtquellen eine Auflicht- oder eine Hintergrundbeleuchtung (backlight) oder eine Dunkelfeldbeleuchtung (darkfield) bewirkt. Damit sind die relevanten Bereiche der verschiedenen Anoden-/Kathoden-Lagen gut zu erkennen. In einer Variante des Verfahrens wird mit Spiegeln oder Prismen der Strahlengang der dritten Kameras zur Adaption an räumliche Gegebenheiten geführt.

In einer Variante des Verfahrens wird eine Matrixkamera verwendet, mit einem Sichtfeld auf den Elektroden-Stapel von der Seite, die den Elektroden-Stapel als Ganzes vollständig in einem Bildeinzug erfasst, oder zwei Matrixkameras, die jeweils eine von zwei Ecken des Elektroden-Stapels von der Seite erfassen, bis vier Matrixkameras, die alle vier Ecken des Elektroden-Stapels von oben erfassen, und die in der Seitenansicht auf den Elektroden-Stapel an der Ablegestelle gerichtet sind. Auch hier wird in einer Variante durch entsprechende Anordnungen von Spiegeln oder Prismen etc. der Strahlengang der Kameras zur Adaption an räumliche Gegebenheiten geführt.

Für die Beleuchtung werden in einer Variante für jede der Kameras eine koaxiale (rote) Beleuchtung und/oder ein (weißer) Punktstrahler verwendet.

Damit ist sehr präzise zu erkennen, dass die Anoden-/Kathoden-Lagen stets an der korrekten Stelle und in korrekter Ausrichtung auf dem Elektroden-Stapel abgelegt werden.

In einer Variante des Verfahrens werden auch die Bewegungen der Hubvorrichtung mit dem jeweiligen Werkstückträger längs der Hoch-Achse (z-Achse) und deren Ungenauigkeiten berücksichtigt, indem vor dem Beginn des Ablegens der Anoden-/Kathoden-Lagen zum Bilden des Elektroden-Stapels die x-, y- Positionen des Werkstückträgers bei verschiedenen z-Höhen mit den Kameras erfasst werden. So kann mit den Kameras während des Ablegens der Anoden-/Kathoden-Lagen überprüft werden, ob die Anoden-/Kathoden-Lagen an der richtigen x-, y- Position abgestapelt wurden, die der jeweiligen z-Position des Werkstückträgers auf der Hubvorrichtung entspricht. Auch die Genauigkeit in der Drehrichtung um die Hochachse (in theta) beim Aufnehmen der Anoden-/Kathoden-Lagen mit der Stapelvorrichtung kann hierdurch auskorrigiert werden für ein späteres präzises Abstapeln der Anoden-/Kathoden-Lagen des Elektroden-Stapels.

In einer Variante der Vorrichtung ist eine Steuereinheit dazu bestimmt und eingerichtet, eine Position einer abgestapelten Anoden-/Kathoden-Lage im Verhältnis zu den übrigen Lagen des Elektroden-Stapels zu bestimmen, indem nach dem Ablegen der Anoden-/Kathoden-Lagen auf dem Elektroden-Stapel die Position / ein Verdrehen / ein Versatz der einzelnen der Anoden-/Kathoden-Lagen zueinander überprüft wird, und/oder wobei die Steuereinheit dazu bestimmt und eingerichtet ist, einen Versatz der einzelnen der Anoden-/Kathoden-Lagen zueinander mit einem Bildeinzug wenigstens einer dritten Kamera von wenigstens einer (Hoch- und/ oder Quer-) Kante des Elektroden-Stapels zu ermitteln. In einer Variante der Vorrichtung ist die Steuereinheit dazu bestimmt und eingerichtet, einen erhaltenen Bildeinzug durch Ecken-/ Kantensuche dahingehend zu überprüfen, ob eine oder mehrere der Anoden-/Kathoden-Lagen des Elektroden-Stapels gegenüber den übrigen Anoden-/Kathoden-Lagen über- oder unterstehen, und/oder ob eine Genauigkeit beim Abstapeln der Anoden-/Kathoden-Lagen eingehalten wurde.

In einer Variante der Vorrichtung ist die Steuereinheit dazu bestimmt und eingerichtet, aus dem Bildeinzug im Wechsel aufeinander abgestapelter Anoden-Lagen und Kathoden-Lagen des Elektroden-Stapels unterschiedliche Abmessungen mit einer in der Seitenansicht in z-Richtung gestuften (Hoch-)Kante zu ermitteln, und die aufeinander abgestapelten Anoden-Lagen und Kathoden-Lagen auf ihre Gestalt und/oder Abmessungen hin zu untersuchen. In einer Variante der Vorrichtung ist die Steuereinheit dazu bestimmt und eingerichtet, an den aufeinander abgestapelten Anoden-Lagen und Kathoden-Lagen zu untersuchen, mit welcher Abweichung gegenüber den übrigen der Anoden- bzw. Kathoden-Lagen des Elektroden-Stapels jede einzelne Lage über- / untersteht. In einer Variante der Vorrichtung ist die Steuereinheit dazu bestimmt und eingerichtet, einen Bildeinzug dahingehend zu untersuchen, mit welcher Abweichung in der z-Richtung (Hochachse) die verschiedenen Anoden-/Kathoden-Lagen Stufen im Elektroden-Stapel bilden.

In einer Variante der Vorrichtung ist die Steuereinheit dazu bestimmt und eingerichtet, von wenigstens zwei dritten Kameras Bildeinzüge zu empfangen, die von der Seite auf Ecken, und/oder deren Kanten in der Hochachse (z-Achse) des ElektrodenStapels an der Ablagestelle enthalten, um an den aufeinander abgestapelten Anoden-Lagen und Kathoden-Lagen zu untersuchen, mit welcher Abweichung in der x oder y-Richtung (quer, längs) gegenüber den übrigen Anoden- bzw. Kathoden-Lagen des Elektroden-Stapels jede einzelne Lage in Längs- und/oder Querrichtung der Lagen über-/untersteht; und/oder zu untersuchen, mit welcher Abweichung in der z-Richtung (Hochachse) die verschiedenen Anoden-/Kathoden-Lagen Stufen im Elektroden-Stapel bilden.

In einer Variante der Vorrichtung sind die wenigstens zwei Kameras auf eine (Hoch)Kante des Elektroden-Stapels ausgerichtet, und/oder zur Beleuchtung der jeweiligen Kante des Elektroden-Stapels (weiße) Punktstrahler leuchten die gewünschte Position an dem Elektroden-Stapel aus.

In einer Variante der Vorrichtung ist die Steuereinheit dazu bestimmt und eingerichtet, von wenigstens vier Kameras Bildeinzüge zu empfangen, welche die von der Seite gesehenen vier Ecken des Elektroden-Stapels an der Ablegestelle enthalten, um eine Position der obersten abgestapelten Anoden-/Kathoden-Lage im Verhältnis zu wenigstens einer darunter liegenden Lage des Elektroden-Stapels zu bestimmen, indem nach dem Ablegen der Anoden-/Kathoden-Lagen auf dem Elektroden-Stapel die Position / ein Verdrehen / ein Versatz der einzelnen der Anoden-/Kathoden-Lagen zueinander überprüft wird, mittels eines Bildeinzugs von jeder der vier Kameras.

In einer Variante der Vorrichtung ist die Steuereinheit dazu bestimmt und eingerichtet, Bewegungen der Hubvorrichtung mit dem jeweiligen Werkstückträger längs der Hoch-Achse (z-Achse) und deren Ungenauigkeiten zu berücksichtigen, indem vor dem Beginn des Ablegens der Anoden-/Kathoden-Lagen zum Bilden des ElektrodenStapels die x-, y- Positionen des Werkstückträgers bei verschiedenen z-Höhen mit den dritten Kameras mittels Bildeinzügen erfasst werden, die entsprechenden Daten in einem Datenspeicher gespeichert werden zum Vergleich mit x-, y- Positionen des Werkstückträgers bei verschiedenen z-Höhen während des Ablegens der Anoden-/Kathoden-Lagen, um zu überprüfen, ob die Anoden-/Kathoden-Lagen innerhalb der Genauigkeit an der x-, y- Position abgestapelt wurden, die der jeweiligen z-Position des Werkstückträgers auf der Hubvorrichtung entspricht, und/oder zum Korrigieren der Orientierung in der Drehrichtung um die z-Achse (Hoch-Achse) (in theta) beim Aufnehmen und/oder Ablegen der Anoden-/Kathoden-Lagen.

Die vorstehend beschriebenen Vorgehensweisen und Vorrichtungen erlauben eine erhebliche Verminderung des Kurzschlussrisikos des so gebildeten Moduls, was auch zu einer Erhöhung der Gesamtqualität und Effizienz der fertig hergestellten Brennstoff- oder Batteriezelle führt.

Insgesamt erlaubt die oben beschriebene Vorrichtung und das Verfahren, bei hohem Stapel-Durchsatz, eine Genauigkeit von ± 0.1 mm oder genauer.

Vorstehend sind Verfahrensaspekte in Vorrichtungsbegriffen und *vice versa* dargestellt. Dabei dienen sowohl die Verfahrensaspekte als auch die Vorrichtungsaspekte zur Erläuterung der Anordnung und ihres Betriebes.

### Kurzbeschreibung der Figuren

Weitere Merkmale, Eigenschaften und Vorteile der Vorrichtungen und der Verfahrensweisen sind der nachfolgenden Beschreibung in Verbindung mit der Zeichnung zu entnehmen. Mögliche Abwandlungen werden für einen Fachmann anhand der nachstehenden Beschreibung deutlich, in der auf die beigefügten Zeichnungen Bezug genommen ist. Dabei zeigen die Fig. schematisch die hier erörterten Vorrichtungen und erläutern deren Betrieb. In den Fig. gleiche oder analoge Teile sind im Einzelfall nicht individuell mit Bezugszeichen versehen.

Hierbei zeigen:
Fig. 1 eine Vorrichtung zur Herstellung von Modulen oder Vorstufen von Modulen in einer schematischen Vorderansicht;
Fig. 2 einen der beiden Lagenwender einer Vorrichtung zur Herstellung von Modulen oder Vorstufen von Modulen in einer weiteren Variante in einer schematischen Seitenansicht;
Fig. 3 eine perspektivische Seitenansicht eines Lagenwenders mit einem Stapeltisch, auf dem sich ein Lagenstapel befindet;
Fig. 4a und 4b eine Draufsicht auf die Ablage eines Stapeltisches, auf dem sich ein Lagenstapel befindet, an der ersten und der zweiten Ablagestelle mit einer Konfiguration der Bildaufnehmer für die zweite Inspektion;
Fig. 5a und 5b eine Draufsicht auf die Ablage eines Stapeltisches, auf dem sich ein Lagenstapel befindet, an der ersten und der zweiten Ablagestelle mit einer Konfiguration der Bildaufnehmer für die dritte Inspektion;
Fig. 6 eine Draufsicht auf die Ablage eines Stapeltisches, auf dem sich ein Lagenstapel befindet, an der ersten und der zweiten Ablagestelle mit einer Konfiguration der Bildaufnehmer für die zweite Inspektion; und
Fig. 7 eine Draufsicht auf die Ablage eines Stapeltisches, auf dem sich ein Lagenstapel befindet, an der ersten und der zweiten Ablagestelle mit einer weiteren Konfiguration der Bildaufnehmer für die dritte Inspektion.

Detaillierte Beschreibung von Varianten der Vorrichtungen und der Verfahrensweisen Fig. 1 veranschaulicht schematisch eine Vorrichtung 100 zur Herstellung von Modulen oder Vorstufen von Modulen. Hier wird die Vorrichtung 100 exemplarisch anhand der Herstellung von Brennstoff- oder Batterie-Zellen erläutert, die Lagenmaterial und / oder Fluid enthalten.

Bei der Vorrichtung 100 dient ein erster Förderer 110 dazu, einzelne Anoden-Lagen AL zu einer ersten Übergabestelle U1 zum Übergeben an einen ersten Lagen-Wender 150 heran zu fördern. Ein zweiter Förderer 120 dient dazu, einzelne Kathoden-Lagen KL zu einer zweiten Übergabestelle U2 zum Übergeben an einen zweiten LagenWender 200 heran zu fördern.

Wie in Fig. 1 veranschaulicht, sind der erste Förderer 110 und der zweite Förderer 120 im oberen Bereich der Vorrichtung 100 auf gleichem Niveau, benachbart und im Abstand zueinander angeordnet. Dabei sind der erste Förderer 110 und der zweite Förderer 120 hier als Bandförderer ausgestaltet, die mit ihrer jeweiligen Unterseite 112, 122 dem ersten bzw. zweiten Lagen-Wender 150, 200 zugewandt sind. So können der erste Förderer 110 und der zweite Förderer 120 die einzelnen Anoden-Lagen AL bzw. die einzelnen Kathoden-Lagen KL an ihrer Unterseite 112, 122 zu der ersten bzw. der zweiten Übergabestelle U1, U2 fördern. Insbesondere haben hier der erste Förderer 110 und der zweite Förderer 120 jeweils ein gesteuertes Unterdruck-Förderband mit Saugöffnungen 114, 124, um mittels gesteuert zugeführtem pneumatischem Unterdruck p-- die einzelnen Anoden-Lagen AL bzw. die einzelnen Kathoden-Lagen KL aufzunehmen und während des Förderns zu der ersten bzw. der zweiten Übergabestelle U1, U2 zu halten. Mittels einem optional gesteuert zugeführten pneumatischen Überdruck p++ können die einzelnen Anoden-Lagen AL bzw. die einzelnen Kathoden-Lagen KL kontrolliert und schnell an der ersten bzw. der zweiten Übergabestelle U1, U2 an den ersten bzw. zweiten Lagen-Wender 150, 200 abgegeben werden. Alternativ kann der pneumatische Unterdruck p-- des ersten bzw. zweiten Förderers 110, 120 an der ersten bzw. der zweiten Übergabestelle U1, U2 reduziert oder aufgehoben werden. Der erste Förderer 110 kann die einzelnen Anoden-Lagen AL von einem Stapel oder einem dritten Förderer (nicht gezeigt), insbesondere einem Unterdruck-Förderband, übernehmen. Der zweite Förderer 120 kann die einzelnen Kathoden-Lagen KL von einem Stapel oder einem vierten Förderer (nicht gezeigt), insbesondere einem Unterdruck-Förderband, übernehmen.

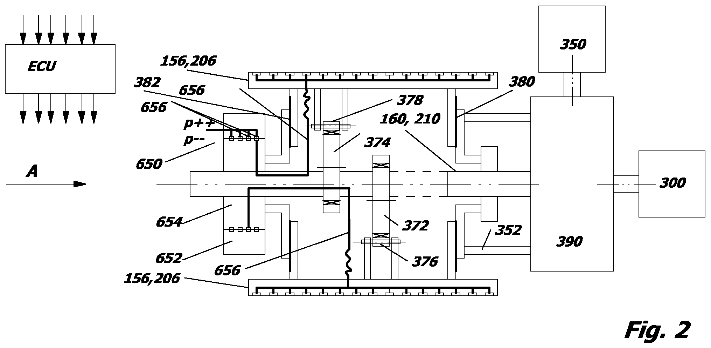

Der erste und der zweite Lagen-Wender 150, 200 haben jeweils vier etwa rechteckige ebene Aufnehmer 156, 206 und jeweils einen ersten Antrieb 300 (siehe Fig. 2). Mit den Aufnehmern 156, 206 wird eine jeweilige einzelne Anoden- bzw. Kathoden-Lage AL, KL an der jeweiligen ersten oder zweiten Übergabestelle U1, U2 von dem ersten bzw. zweiten Förderer 110, 120 flächig aufgenommen. Diese Aufnehmer 156, 206 sind mittelbar an einer drehbar gelagerten Welle 160, 210 radial verschiebbar gelagert. Diese Welle 160, 210 dreht die jeweiligen Aufnehmer 156, 206 mittels des ersten Antriebs 300 um einen jeweiligen Rotationswinkel RW - hier 180° - zu einer jeweiligen ersten bzw. zweiten Abgabestelle A1, A2. Der erste Antrieb 300 rotiert die Lagen-Wender 150, 200 insgesamt. Damit sind der erste und der zweite LagenWender 150, 200 mit ihren jeweiligen mehreren Aufnehmern zum Aufnehmen der einzelnen Anoden- oder Kathoden-Lagen AL, KL eingerichtet, wenn die Aufnehmer nacheinander an der jeweiligen Übergabestelle U1, U2 und der jeweiligen Abgabestelle A1, A2 kontinuierlich oder getaktet vorbei rotieren, und dabei die jeweilige einzelne Anoden- oder Kathoden-Lage AL, KL aufnehmen bzw. abgeben. Der erste und der zweite Lagen-Wender 150, 200 drehen sich mittels ihres jeweiligen ersten Antriebs 300 im bzw. gegen den Uhrzeigersinn so, dass die einzelnen Anoden- bzw.

Kathoden-Lagen AL, KL von ihrer Übergabestelle U1, U2 zu ihrer Abgabestelle A1, A2 unter Vermeidung des Raums R zwischen dem ersten und dem zweiten LagenWender 150, 200 gelangen.

Ersichtlich haben der erste und der zweite Lagen-Wender 150, 200 im Wesentlichen einen übereinstimmenden Aufbau, übereinstimmende Funktion und/oder übereinstimmende Abmessungen.

Ein nicht näher veranschaulichtes Endlos-Separatorband wird von oben zwischen den beiden Förderern 110, 120 in und durch den Raum R geführt und tritt und am unteren Ende des Raums R aus einem Spalt zwischen zwei drehbar gelagerten Walzen aus. Das Separatorband wird z-förmig auf dem Stapeltisch gefaltet und die Anodenund Kathoden-Lagen sind durch den Separator voneinander getrennt.

Der erste und der zweite Lagen-Wender 150, 200 haben (siehe Fig. 1) für die Aufnehmer 156, 206 als zweiten Antrieb 350 eine Anordnung aus an Drehkränzen angeordneten Linearantrieben 351, von denen jeweils ein Linearantrieb 351 mit einem der Aufnehmer 156, 206 getrieblich gekoppelt ist, um die Aufnehmer des jeweiligen Lagen-Wenders 150, 200 radial zurückzuziehen und/oder auszufahren.

Der erste und der zweite Lagen-Wender 150, 200 haben in einer weiteren Variante jeweils einen zweiten Antrieb 350 (siehe Fig. 2) für die Aufnehmer 156, 206. Dieser zweite Antrieb 350 dient dazu, den jeweiligen Aufnehmer 156, 206 radial zurückzuziehen, wenn sich - nach dem Ablegen der jeweiligen Lage auf dem Stapeltisch 400 - der Aufnehmer des anderen Lagen-Wenders auf dem Weg zu ihrer Übernahmestelle U1, U2 in dem Raum zwischen den beiden Lagen-Wendern nähert. Der zweite Antrieb 350 rotiert das Rohr, den damit verbundenen Drehkranz und die Aufnehmer 156, 206 um das Drehzentrum DZ. Bedingt durch die Kopplung an einen nachstehend erläuterten Exzenter werden die Aufnehmer 156, 206 radial bewegt. Der erste Antrieb 300 ist ein gesteuerter Servo-Motor, der den Lagen-Wender als Ganzes dreht, um den Aufnehmer um ein Drehzentrum des Lagen-Wenders zu wenden. Der zweite Antrieb 350 ist in der in Fig. 2 veranschaulichten Variante ein vom ersten Drehantrieb 300 unabhängig zu steuernder Servo-Motor, der getrieblich mit der als Exzenterwelle ausgestalteten inneren Welle 160, 210 gekoppelt ist. Diese Exzenterwelle ist mit Exzentern 372, 374 für jeden der Aufnehmer versehen, um die Aufnehmer 156, 206 des jeweiligen Lagen-Wenders 150, 200 radial zurückzuziehen und auszufahren. Dazu ist jeder Exzenter 372, 374 mit einem Nadellager eingefasst, das außen einen Ring 376, 378 trägt, der an dem jeweiligen Aufnehmer 156, 206 angelenkt ist. Der jeweilige Exzenter 372, 374 bewirkt bei einer Drehung der Welle 160, 210, dass sich die jeweils in radial orientierten Linearführungen 380, 382 geführten Aufnehmer 156, 206 nach außen oder innen bewegen. Insbesondere erfolgt ein radiales Zurückziehen der Aufnehmer des ersten und/oder des zweiten Lagen-Wenders, wenn sich der Aufnehmer auf dem Weg von seiner Abgabestelle zu seiner Übergabestelle oder von seiner Übergabestelle zu seiner Abgabestelle einem Aufnehmer des anderen Lagen-Wenders nähert.

Der zweite Antrieb 350 rotiert die jeweilige innere Welle 160, 210 und bewirkt das radiale Aus- und Einfahren der Aufnehmer. Insbesondere dient der zweite Antrieb 350 auch dazu, dass der erste und der zweite Lagen-Wender die jeweiligen Aufnehmer radial herausfahren, wenn die Aufnehmer sich der jeweiligen ersten bzw. zweiten Übergabestelle U1, U2 und der ersten bzw. der zweiten Abgabestelle A1, A2 nähern. Insgesamt bewegen sich in dieser Variante die Aufnehmer der beiden LagenWender jeweils etwa auf einer angenäherten, stehenden Ellipse, deren Hauptachsen vom Zentrum der jeweiligen Übergabestelle zum Zentrum der jeweiligen Abgabestelle reicht, und deren Nebenachsen einander nicht berühren. In der Fig. 1 ist diese Ellipse E strichpunktiert an dem zweiten Lagenwender 200 veranschaulicht. Erkennbar muss diese Bewegung nicht symmetrisch sein, da der vom Raum R abliegende Aufnehmer radial weiter herausgefahren ist als der sich im Raum R befindliche Aufnehmer.

Der erste Antrieb 300 und der zweite Antrieb 350 sind über ein kombiniertes Winkelund Axialgetriebe 390 zusammengeführt und versetzen unabhängig voneinander die innere Welle 160, 210 bzw. alle Aufnehmer eines Lagen-Wenders als Ganzes über ein Verbindungselement, z.B. ein Rohr 352, in Rotation. Wie in Fig. 2 veranschaulicht, haben das Rohr 352 und die an den ersten Antrieb 300 gekoppelte Welle kollineare Rotationsachsen.

Ein Stapeltisch 400 zum Aufnehmen der einzelnen Anoden- bzw. Kathoden-Lagen AL, KL an der jeweiligen ersten bzw. zweiten Abgabestelle A1, A2 ist mit einem Antrieb 410 versehen. Dieser Antrieb 410 fährt den Stapeltisch 400 gesteuert entlang der x-Achse zwischen der ersten und der zweiten Abgabestelle A1, A2 hin- und her, so dass der Stapeltisch 400 positionsgenau zu der auf ihm abzulegenden einzelnen Anoden- bzw. Kathoden-Lage AL, KL ausgerichtet ist. In der Fig. 1 ist der Stapeltisch in seiner linken ausgerichteten Position unter dem Lagenwender 150 in durchgezogenen Linien dargestellt, und in seiner rechten ausgerichteten Position unter dem Lagenwender 200 in kurz gestrichelten Linien dargestellt.

Der erste und der zweite Lagen-Wender 150, 200 geben an der ersten bzw. der zweiten Abgabestelle A1, A2 jeweils eine einzelne Anoden- bzw. Kathoden-Lage AL, KL von ihrem Aufnehmer 156, 206 - in der 6 Uhr Position in Fig. 1 - an den Stapeltisch 400 ab, wenn sich der Aufnehmer 156, 206 an der ersten bzw. der zweiten Abgabestelle A1, A2 befindet.

Dazu haben in der hier veranschaulichten Variante der Vorrichtung 100 die erste und die zweite Übergabestelle U1, U2 jeweils ein erstes Zentrum (etwa oberhalb der Mitte der in der 12 Uhr Position befindlichen Aufnehmer zwischen dem Aufnehmer und dem Förderer), sowie die erste bzw. die zweite Abgabestelle A1, A2 jeweils ein zweites Zentrum (etwa unterhalb der Mitte der in der 6 Uhr Position befindlichen Aufnehmer zwischen dem Aufnehmer und dem Stapeltisch). Diese jeweiligen ersten und zweiten Zentren liegen auf einer gedachten Geraden, die ein jeweiliges Drehzentrum DZ des ersten Lagen-Wenders 150 bzw. des zweiten Lagen-Wenders 200 schneiden. Der erste und der zweite Lagen-Wender wenden jeweils nur einzelne der Anoden-Lagen AL bzw. nur einzelne der Kathoden-Lagen KL zu der ersten bzw. der zweiten Abgabestelle A1, A2 hin.

In der Anordnung mit dem Exzenterantrieb können der erste Antrieb eines LagenWenders und der zweite Antrieb desselben Lagen-Wenders durchgehend gleichsinnig oder auch zeitweilig gegenläufig rotieren. Dadurch kann sich die Drehbewegung des Lagen-Wenders als Ganzes mit der Radial-Ein-/Auswärts-Bewegung seiner Aufnehmer derart überlagern, dass ein besonders geringer Abstand zwischen den beiden Lagen-Wendern, und damit ein besonders kurzer Weg zwischen den beiden Abgabestellen, möglich ist. Überdies können die beiden Lagen-Wender (in beiden Varianten der Fig. 1 und 2) durch ihre jeweiligen ersten Antriebe derart in Umdrehung versetzt sein, dass der/die Aufnehmer des einen Lagen-Wenders genau gegenphasig zu dem/den Aufnehmer/n des anderen Lagen-Wenders rotieren. Dies bedeutet, dass im Fall eines Aufnehmers pro Lagen-Wender der eine Aufnehmer des einen Lagen-Wenders sich nahe der Übergabestelle befindet, während der eine Aufnehmer des anderen Lagen-Wenders sich nahe der Abgabestelle befindet. Im Fall von vier Aufnehmern pro Lagen-Wender eilt ein Aufnehmer des einen Lagen-Wenders einem Aufnehmer des anderen Lagen-Wenders um etwa 45° vor.

Der Stapeltisch 400 hat eine Ablage 420 für die einzelnen Anoden- und Kathoden-Lagen AL, KL sowie eine Stelleinrichtung 430 mit einem entsprechenden Drehantrieb um die z-Achse, die die Ablage 420 längs der Achsen und um die z-Achse bewegen. So sind der Stapeltisch 400 und seine Ablage 420, genauer gesagt ihr Zentrum, zur ersten bzw. zur zweiten Abgabestelle A1, A2 sowie den Aufnehmer in der 6 Uhr Position zielgenau auszurichten.

Der Stapeltisch 400 hat einen ersten und einen zweiten Klemmfinger 442, 444. In einer Variante sind zwei Klemmfinger an jeder zweier einander gegenüberliegenden Seiten vorgesehen. Dabei bewegen sich die Klemmfinger in y-Richtung senkrecht zur Rotationsebene der Aufnehmer. Diese zwei Klemmfinger 442, 444 greifen von beiden (Quer- oder Längs-)Seiten entlang der x- oder y-Richtung seitlich über den sich aus den aus Anoden- und Kathoden-Lagen AL, KL bildenden Elektroden-Stapel und kommen gesteuert mit der jeweils obersten der Anoden- und Kathoden-Lagen AL, KL in oder außer Eingriff, um die jeweils oberste der Anoden- und Kathoden-Lagen AL, KL gegen den Elektroden-Stapel ES auf der Ablage 420 drängen. Dazu sind entsprechende Linearantriebe 446, 448 in z-Richtung und in x-Richtung oder y-Richtung je nach Anordnung der Klemmfinger 442, 444 vorgesehen, die die ersten und zweiten Klemmfinger 442, 444 relativ zur Grundplatte 450 des Stapeltischs 400 und zu dessen Ablage 420 gesteuert bewegen. Der Stapeltisch 400 ist in einer Variante auf einer starren Platte abgestützt, die eine Ausnehmung hat. Die Grundplatte 450 ist nur in x-Richtung entlang zweier Linearführungen relativ zu der starren Platte verfahrbar. Auf der Grundplatte 450 befindet sich eine Y-Platte, die in y-Richtung relativ zu der Grundplatte 450 verfahrbar ist. Die Y-Platte trägt eine Aktor-Platte. Auf der Aktor-Platte befindet sich die Ablage 420. Die Aktor-Platte ist zusammen mit der Ablage 420 um die z-Achse rotierbar und somit auch die Klemmfinger und deren Aktoren.

Auf der Aktor-Platte befindet sich für jeden Klemmfinger ein x- oder y-Aktor, je nach Bewegungsrichtung und Anordnung der Klemmfinger, um einen einzelnen Klemmfinger in y-Richtung positionieren zu können. Der z-Aktor eines jeden Klemmfingers ist auf einer separaten Platte angeordnet, die auf der Y-Platte und neben der Ablage 420 angeordnet ist. Der y-Aktor verschiebt so die separate Platte und somit den jeweiligen Klemmfinger 442, 444 samt seinem z-Aktor.

Die Klemmfinger 442, 444 dienen auch dazu, das Endlos-Separatorband während der Bewegung des Stapeltisches zwischen den Abgabestellen A1, A2 gegen die Ablage 420 bzw. den bisher gebildeten Stapel zu klemmen, so dass auf der Ablage 420 abgelegte Anoden- und Kathoden-Lagen Al, KL stets durch den elektrisch isolierenden Separator getrennt sind.

Bei Verschiebung der Y-Platte in y-Richtung wird die Aktor-Platte zusammen mit den Klemmfingern in der y-Richtung mitverschoben. Die Ablage 420 ist in z-Richtung durch einen z-Antrieb positionierbar, der genau unterhalb der Ablage angeordnet sein kann und in der mittigen Ausnehmung der starren Platte Bewegungsspielraum in X-Richtung hat.

Der erste und der zweite Lagen-Wender 150, 200 sind dazu eingerichtet, die einzelnen Anoden-Lagen AL und die einzelnen Kathoden-Lagen KL mittels gesteuertem pneumatischem Unterdruck p-- aufzunehmen und während des Wendens zu der ersten bzw. der zweiten Abgabestelle A1, A2 zu halten. Außerdem sind in der hier gezeigten Variante der Vorrichtung 100 der erste und der zweite Lagen-Wender 150, 200 dazu eingerichtet, mittels gesteuertem pneumatischem Überdruck p++ die einzelnen Anoden-Lagen AL und die einzelnen Kathoden-Lagen KL in der ersten bzw. der zweiten Abgabestelle durch einen kurzen Blas-Stoß abzugeben, um die Lagen AL, KL auf der Ablage 420 zur Bildung des Elektroden-Stapels ES zu stapeln.

Dazu ist in der Fig. 2 veranschaulicht, dass der erste und der zweite Lagen-Wender 150, 200 jeweils eine drehbare Über-/Unter-Druck-Verteilung 650 aufweisen, die um die innere Welle 160, 210 herum angeordnet ist, um die Aufnehmer mit dem gesteuerten pneumatischen Unterdruck p-- und/oder Überdruck p++ zu speisen. Dabei sind zwei konzentrische Ringe 652, 654 drehbar, einander fluiddicht umgebend, vorgesehen, in denen für jeden der Aufnehmer eine Über-/Unter-Druckübergabe 656 realisiert ist. Von der Über-/Unter-Druckübergabe 656 reicht für jeden Aufnehmer 156, 206 eine Fluidleitung in die innere Welle 160, 210 und von dort zu einem Anschluss für eine radial flexible Leitung 656 zum jeweiligen Aufnehmer 156, 206. Die flexible Leitung 656 ist mit einer Vielzahl an Öffnungen in der vom Drehzentrum abgewandten Oberfläche der Aufnehmer verbunden.

Alternativ ist jeder dieser Öffnungen eine elastische Düse zugeordnet, welche die Oberfläche des Aufnehmers geringfügig (zum Beispiel kleiner 3 mm) überragen und mit der flexiblen Leitung 656 verbunden sind. Damit lassen sich die Anoden-Lagen AL und Kathoden-Lagen KL sicher und schonend aufnehmen und mit hoher Präzision in ihrer Ausrichtung auf der Ablage 420 wieder abgeben. Die Stelleinrichtung 430 senkt gesteuert die Ablage 420 beim Stapeln nach jedem Ablegen der einzelnen Anoden-Lagen AL und der einzelnen Kathoden-Lagen KL um eine Wegstrecke ab, die einer Dicke einer einzelnen Anoden-Lage AL bzw. einer einzelnen Kathoden-Lage KL entspricht. Damit ist ein sehr kurzer, definierter freier Weg zwischen dem Abgeben von dem Aufnehmer 156, 206 und dem Auftreffen auf dem Elektroden-Stapel ES sicherzustellen.

Nachstehend ist die in die vorstehenden Varianten integrierte erste bis dritte Inspektion des Lagenmaterials, zum Beispiel bei der Herstellung von Brennstoff- oder Batterie-Zellen, veranschaulicht.

Die erste Inspektionsvorrichtung hat einen ersten Lagen-Förderer 150 (in Fig. 1 links) mit vier Aufnehmern 156 und einem ersten Antrieb 300, um eine jeweilige einzelne Anoden- oder Kathoden-Lage AL, KL mittels des wenigstens einen Aufnehmers 156 von einer ersten Übergabestelle U1 aufzunehmen, und zu einer ersten Abgabestelle A1 zu bringen. Der erste Lagen-Wender 150 gibt an der ersten Abgabestelle A1 jeweils eine einzelne Anoden- oder Kathoden-Lage AL, KL von ihrem Aufnehmer 156 an den Stapeltisch 400, genauer gesagt auf dessen Ablage 420, ab, wenn sich der jeweilige wenigstens eine Aufnehmer 156 an der ersten Abgabestelle A1 befindet. Der Antrieb 410 richtet den Aufnehmer 156 und den Stapeltisch 400 relativ zueinander in Abhängigkeit von einer Signalisierung basierend auf einer Verarbeitung des ersten und/oder zweiten Bildeinzugs aus. Ein erster Bildaufnehmer K1 ist zwischen der ersten Übergabestelle U1 und der ersten Abgabestelle A1 auf einen ersten Bereich E1 des ersten Lagen-Wenders 150 ausgerichtet und führt einen ersten Bildeinzug aus, wenn der Aufnehmer 156 des ersten Lagen-Wenders 150 mit der einzelnen Anoden- oder Kathoden-Lage AL, KL den ersten Bildaufnehmer K1 passiert. Ein zweiter Bildaufnehmer K2 ist zwischen der ersten Übergabestelle U2 und der ersten Abgabestelle A2 auf einen zweiten Bereich E2 des ersten Lagen-Wenders 150 ausgerichtet und führt einen zweiten Bildeinzug aus, wenn der Aufnehmer 156 des ersten Lagen-Wenders 150 mit der einzelne Anoden- oder Kathoden-Lage AL, KL den Bildaufnehmer K2 passiert. Der zweite Bereich E2 kann von dem ersten Bereich E1 verschieden sein. Der Stapeltisch 400 nimmt an der ersten Abgabestelle A1 die jeweilige einzelne Anoden-Lage AL und an der zweiten Ablagestelle A2 die jeweilige einzelne Kathoden-Lage KL zur Bildung eines Lagen-Stapels auf.

In der gezeigten Variante hat der erste Lagen-Förderer 150 einen Lagen-Wender 156, um eine jeweilige einzelne Anoden- oder Kathoden-Lage mittels des wenigstens einen Aufnehmers 156 von der ersten Übergabestelle U1 aufzunehmen und um einen jeweiligen Rotationswinkel - hier etwa 180° - zu der ersten Abgabestelle A1 zu drehen.

In einer hier nicht weiter gezeigten Variante hat der erste Lagen-Förderer 150 einen Lagen-Greifer, der eine jeweilige einzelne Anoden- oder Kathoden-Lage mittels eines Aufnehmers, zum Beispiel in Gestalt eines Saug- oder Greifwerkzeugs, von der ersten Übergabestelle U1 aufnimmt, und zu der ersten Abgabestelle A1 bringt.

Analog zum ersten Lagen-Förderer 150 ist ein zweiter Lagen-Förderer 200 (in Fig. 1 rechts) dazu vorgesehen und eingerichtet, eine einzelne Kathoden- oder Anoden-Lage KL, AL aufzunehmen und zu einer zweiten Abgabestelle A2 zu bringen. Ein erster Bildaufnehmer K1' zwischen der zweiten Übergabestelle U2 und der zweiten Abgabestelle A2 ist auf einen ersten Bereich E1' des zweiten Lagen-Förderers 200 ausgerichtet und führt einen ersten Bildeinzug aus, wenn der zweite Lagen-Förderer 200 den ersten Bildaufnehmer K1' passiert. Ein zweiter Bildaufnehmer K2' ist zwischen der zweiten Übergabestelle U2 und der zweiten Abgabestelle A2 auf einen zweiten Bereich E2' des zweiten Lagen-Förderers ausgerichtet und führt einen zweiten Bildeinzug aus, wenn der zweite Lagen-Förderer den zweiten Bildaufnehmer K2' passiert.

In der gezeigten Variante hat der zweite Lagen-Förderer 200 einen Lagen-Wender 206, der eine jeweilige einzelne Anoden- oder Kathoden-Lage mittels des wenigstens einen Aufnehmers 206 von der zweiten Übergabestelle U2 aufnimmt, und um einen jeweiligen Rotationswinkel - hier 180° - zu einer zweiten Abgabestelle A2 dreht.

In einer hier nicht weiter gezeigten Variante hat der zweite Lagen-Förderer 200 einen Lagen-Greifer umfasst, der dazu vorgesehen und eingerichtet ist, eine jeweilige einzelne Anoden- oder Kathoden-Lage mittels eines Aufnehmers, zum Beispiel in Gestalt eines Saug- oder Greifwerkzeugs, von der zweiten Übergabestelle U2 aufzunehmen, und zu der zweiten Abgabestelle A2 zu bringen.

Dem Stapeltisch 400 ist ein Antrieb 410 zugeordnet, der den Stapeltisch 400 zwischen der ersten und der zweiten Abgabestelle A1, A2 hin- und herfährt. Der erste und der zweite Lagen-Förderer geben jeweils an der ersten bzw. der zweiten Abgabestelle A1, A2 eine einzelne Anoden- oder Kathoden-Lage AL, KL an den Stapeltisch 400 ab, wenn dieser sich an der ersten bzw. der zweiten Abgabestelle A1, A2 befindet. Ein Antrieb richtet den jeweiligen Lagen-Förderer und/ oder den jeweiligen wenigstens einen Lagen-Wender 156, 206 zu dem Stapeltisch 400 in Abhängigkeit von einer Signalisierung basierend auf einer Verarbeitung des ersten und des zweiten Bildeinzugs aus.

Der erste Bereich E1 und der zweite Bereich E2 der Aufnehmer der beiden LagenWender 150, 200 sind hier diagonal zueinander liegende Eck-Bereiche des Aufnehmers der Lagen-Wender 150, 200. Der erste Bereich E1 und der zweite Bereich E2 der Aufnehmer der beiden Lagen-Wender 150, 200 sind zum Aufnehmen einer ersten Ecke bzw. zweiten Ecke der einzelnen Anoden- oder Kathoden-Lage AL, KL vorgesehen und eingerichtet. Folglich sind der erste und der zweite Bildaufnehmer K1, K2, K1', K2' diagonal zueinander angeordnet und auf den ersten Bereich E1 und den zweiten Bereich E2 der Aufnehmer der beiden Lagen-Wender 150, 200 ausgerichtet, wenn diese die ersten und zweiten Bildaufnehmer K1, K2, K1', K2' passieren. Der erste und der zweite Bildaufnehmer K1, K2, K1', K2' sind hier so zwischen den beiden Übergabestellen U1, U2 und den beiden Abgabestellen A1, A2 angeordnet, dass sie auf den ersten bzw. zweiten Bereich E1, E2 der jeweiligen Aufnehmer 156, 206 zum Zeitpunkt des ersten und/oder zweiten Bildeinzugs unter einem Winkel von etwa 90° zwischen der Kameraachse und der Anode bzw. Kathode in der Inspektionsposition für die ersten und zweiten Bildaufnehmer K1, K2, K1', K2' ausgerichtet sind.

Der erste und/oder der zweite Bildaufnehmer K1, K2, K1', K2' sind hier zur Fokussierung entlang ihrer optischen Achsen einstellbar. In anderen Varianten sind sie stattdessen oder zusätzlich auch im Betrieb verfahrbar. Dem ersten und dem zweiten Bildaufnehmer K1, K2, K1', K2' zugeordnete Weißlichtquellen erhellen die Anoden-/Kathoden-Lage für einen Bildeinzug. In weiteren Varianten sind dem ersten oder dem zweiten Bildaufnehmer K1, K2, K1', K2' ein oder mehrere optisch wirksame Elemente zugeordnet, um an einer oder mehreren Stellen oder Bereichen die Position und/oder Orientierung der Anoden-/Kathoden-Lage vor oder bei ihrem Eintreffen an der Abgabestelle oder auf dem Weg zu der Abgabestelle zu erfassen. Optisch wirksame Elemente können eine Linse, oder Linsenanordnung, ein Spiegel oder eine Spiegelanordnung, ein Prisma oder eine Prismenanordnung, eine Lichtleiteranordnung, ein Flächen-Licht, ein koaxiales Ring-Licht, ein Dunkelfeld-Licht etc., oder Kombinationen davon sein.

Die Steuereinheit ECU ermittelt aus dem/den Bildeinzügen Korrekturwerte aus der Position und/oder Orientierung der Anoden-/Kathoden-Lage AL, KL vor deren Aufnehmen durch den Stapeltisch 400, der Position und/ oder Orientierung des Stapeltisches 400, und/oder der Position und/oder Orientierung der aufgenommenen einzelnen Anoden-/Kathoden-Lage AL, KL relativ zum Stapeltisch 400 während eines Wendens der Anoden-/Kathoden-Lage AL, KL zum Stapeltisch 400. Die Steuereinheit ECU berücksichtigt diese Korrekturwerte beim Ausrichten des Stapeltisches 400 mit der transportierten Anoden-/Kathoden-Lage relativ zur Ablagestelle A1, A2 in Stell-Befehlen an den Lagenwender, den Aufnehmer und/oder den Stapeltisch. Die Steuereinheit 400 berücksichtigt diese Korrekturwerte insbesondere für die Ausrichtung und den Ort des Stapeltisches beim Aufnehmen der Anoden-/Kathoden-Lage in Stell-Befehlen an den Lagenwender, den Aufnehmer und/oder den Stapeltisch derart, dass der Stapeltisch die jeweilige Anoden-/Kathoden-Lage in einer mittigen Null-Position und/oder zum an der Abgabestelle befindlichen Elektroden-Stapel fluchtend ausgerichtet aufnimmt.

Die Steuereinheit bestimmt durch Überprüfung der Position der ankommenden Anoden-/Kathoden-Lage AL, KL in den Bildeinzügen unmittelbar vor der jeweiligen Abgabestelle A1, A2 die Ausrichtung und den Ort des Stapeltisches 400 beim oder vor dem Aufnehmen der Anoden-/Kathoden-Lage AL, KL.

Zur Inspektion dient auch ein Inspektionsverfahren mit den Schritten: Aufnehmen einer Anoden-/Kathoden-Lage AL, KL mittels eines Aufnehmers 156 eines LagenWenders 150, 200 von einer Übergabestelle U1, U2; Fördern des Aufnehmers 156 des Lagen-Wenders 150, 200 von der Übergabestelle zu einer Abgabestelle A1, A2; Erfassen von Position und/oder Orientierung in x, y, z, und/oder theta der Anoden-/Kathoden-Lage AL, KL an dem Aufnehmer 156 des Lagen-Wenders 150, 200 mittels eines ersten Bildaufnehmers K1 zwischen der Übergabestelle U1 und der Abgabestelle A1, wobei der erste Bildaufnehmer K1 auf einen ersten Bereich E1 des LagenWenders 150 ausgerichtet und zu einem ersten Bildeinzug vorgesehen und eingerichtet ist, wenn der Aufnehmer des Lagen-Wenders den ersten Bildaufnehmer K1 passiert; Erfassen von Position und/oder Orientierung in x, y, z, und/oder theta der Anoden-/Kathoden-Lage AL, KL an dem wenigstens einen Aufnehmer 156 des LagenWenders 150, 200 mittels eines zweiten Bildaufnehmers K2 zwischen der Übergabestelle U1, U2 und der Abgabestelle A1, wobei der zweite Bildaufnehmer K2 auf einen zweiten Bereich E2 des Lagen-Wenders 150 ausgerichtet und zu einem zweiten Bildeinzug vorgesehen und eingerichtet ist, wenn der Aufnehmer des Lagen-Wenders den zweiten Bildaufnehmer K2 passiert; Ausrichten des Aufnehmers 156 und des Stapeltisches 400, genauer gesagt dessen Ablage 420, relativ zueinander in Abhängigkeit von einer Signalisierung basierend auf einer Verarbeitung des ersten und/oder zweiten Bildeinzugs; und Abgeben der Anoden- oder Kathoden-Lage AL, KL von dem Aufnehmer 156 an der Abgabestelle A1, A2 auf den Stapeltisch 400 zur Bildung eines Lagen-Stapels, wenn sich der jeweilige Aufnehmer 156 an der Abgabestelle A1, A2 befindet.

Der erste und der zweite Bildaufnehmer K1, K2 erfassen in senkrechter Draufsicht auf die Anoden-/Kathoden-Lage AL, KL deren Position und/oder Orientierung in x, y, z, und/oder theta, wenn der Aufnehmer des Lagen-Wenders den jeweiligen Bildaufnehmer K1, K2 passiert. Eine dem ersten und/oder dem zweiten Bildaufnehmer K1, K2 zugeordnete Lichtquelle L1, L2 erhellt die Anoden-/Kathoden-Lage AL, KL für einen Bildeinzug durch den ersten und den zweiten Bildaufnehmer K1, K2. Der erste und der zweite Bildaufnehmer K1, K2 erfassen in einer nicht veranschaulichten Variante mit einem Bildeinzug die Anoden-/Kathoden-Lage AL, KL vollständig, um deren Position und/oder Orientierung in x, y, z, und/oder theta zu erfassen. In einer weiteren Variante erfassen der erste und/oder der zweite Bildaufnehmer K1, K2 relativ zu einem jeweiligen festgelegten Bildaufnehmer-Nullpunkt mit einem einzigen Bildeinzug einen Bereich, wenigstens einen Eck-Bereich, zwei diagonale Eck-Bereiche, oder wenigstens einen Eck-Bereich und zumindest einen Abschnitt einer Kante der Anoden-/Kathoden-Lage AL, KL, um die Position und/oder Orientierung in x, y, z, und/oder theta der Anoden-/Kathoden-Lage AL, KL zu erfassen. Der erste oder der zweite Bildaufnehmer K1, K2 können als Matrixkameras oder als Zeilenkameras ausgestaltet sein, die die Position und/oder Orientierung in x, y, z, und/oder theta der Anoden-/Kathoden-Lage AL, KL vor oder bei ihrem Eintreffen an der Abgabestelle A1 oder auf dem Weg zu der der Abgabestelle A1 erfassen.

Die Korrekturwerte werden ermittelt aus der Position und/oder Orientierung in x, y, z, und/ oder theta der Anoden-/Kathoden-Lage AL, KL nach deren Aufnehmen durch den wenigstens einen Aufnehmer des Lagen-Wenders, der Position und/oder Orientierung in x, y, z, und/ oder theta des Stapeltisches 400, und/oder der Position und/oder Orientierung in x, y, z, und/oder theta der aufgenommenen einzelnen Anoden-/Kathoden-Lage AL, KL während eines Wendens der Anoden-/Kathoden-Lage AL, KL zu dem Stapeltisch 400. Diese Korrekturwerte werden berücksichtigt beim Ausrichten in x, y, z, und/oder theta des Stapeltisches 400 an der Abgabestelle A1, A2 relativ zum Aufnehmer des Lagen-Wenders mit der transportierten Anoden-/Kathoden-Lage AL, KL an der Abgabestelle A1, A2. Diese Korrekturwerte werden in x, y, z, und/oder theta beim Ausrichten des Stapeltisches 400 bzw. des Aufnehmers des Lagen-Wenders derart berücksichtigt, dass die Anoden-/Kathoden-Lage AL, KL in einer mittigen Null-Position und/oder fluchtend ausgerichtet von dem Stapeltisch 400 aufgenommen wird.

Bei der zweiten Inspektionsvorrichtung 100 nimmt der erste Lagen-Förderer 150 eine einzelne Anoden- oder Kathoden-Lage AL, KL von einer ersten Übergabestelle U1 auf, und bringt sie zu einer ersten Abgabestelle A1. Ein Stapeltisch 400, genauer gesagt dessen Ablage 420, nimmt an der ersten Abgabestelle A1 die einzelne Anoden- oder Kathoden-Lage AL, KL zur Bildung eines Lagen-Stapels auf. Der erste Lagen-Förderer 150 gibt an der ersten Abgabestelle A1 jeweils eine einzelne Anodenoder Kathoden-Lage AL, KL an den Stapeltisch 400 ab, wenn dieser sich an der ersten Abgabestelle A1 befindet. Ein dritter Bildaufnehmer K3, K3' ist auf wenigstens einen eine Oberkante OK eines auf dem Stapeltisch 400 befindlichen Lagen-Stapels umfassenden Bereich E3, E3' in einer Seitenansicht gerichtet. Dieser Bereich E3, E3' umfasst eine Anschluss-Fahne T einer sich zuoberst auf dem Lagen-Stapel befindlichen Anoden- oder Kathoden-Lage AL, KL. Der dritte Bildaufnehmer K3, K3' nimmt einen dritten Bildeinzug vor, nachdem die Anoden- bzw. Kathoden-Lage AL, KL auf dem Lagen-Stapel auf dem Stapel-Tisch 400 abgelegt ist. Eine Steuerung ECU gibt in Abhängigkeit von einer Signalisierung basierend auf einer Verarbeitung des dritten Bildeinzugs die Un-Brauchbarkeit des Lagen-Stapels an.

Der Lagen-Förderer hat hier einen Lagen-Wender, der jeweils einzelne Anoden- oder Kathoden-Lagen mittels einem von vier Aufnehmern 156 von der ersten Übergabestelle U1 aufnimmt und um einen jeweiligen Rotationswinkel - hier von 180° - zu der ersten Abgabestelle A1 dreht.

In einer nicht weiter veranschaulichten Variante hat der Lagen-Förderer einen Lagen-Greifer, der eine jeweilige einzelne Anoden- oder Kathoden-Lage mittels eines Aufnehmers, zum Beispiel in Gestalt eines Saug- oder Greifwerkzeugs, von der ersten Übergabestelle U1 aufnimmt und zu der ersten Abgabestelle A1 bringt.

Ein zum ersten Lagen-Förderer analoger zweiter Lagen-Förderer nimmt eine einzelne Kathoden- oder Anoden-Lage KL, AL auf und bringt sie zu einer zweiten Abgabestelle A2. Dem Stapeltisch 400 ist ein Antrieb 410 zugeordnet, der den Stapeltisch 400 zwischen der ersten und der zweiten Abgabestelle A1, A2 hin- und herfährt. Der erste und der zweite Lagen-Förderer geben jeweils an der ersten bzw. der zweiten Abgabestelle A1, A2 eine einzelne Anoden- oder Kathoden-Lage AL, KL an den Stapeltisch 400 ab, wenn dieser sich an der ersten bzw. der zweiten Abgabestelle A1, A2 befindet. Wenigstens ein Antrieb dient dazu, den jeweiligen Lagen-Förderer und/ oder den jeweiligen wenigstens einen Lagen-Wender 156, 206 oder Lagen-Greifer relativ zu dem Stapeltisch 400 in Abhängigkeit von einer Signalisierung basierend auf einer Verarbeitung des ersten und/ oder zweiten Bildeinzugs in einer Steuerung ECU auszurichten.

Der zweite Lagen-Förderer hat ebenfalls einen Lagen-Wender und nimmt ebenfalls eine einzelne Anoden- oder Kathoden-Lage mittels des Aufnehmers 206 von der zweiten Übergabestelle U2 auf und dreht sie um einen Rotationswinkel - hier 180° - zu einer zweiten Abgabestelle A2.

Der zweite Lagen-Förderer hat in einer nicht gezeigten Variante einen Lagen-Greifer, der eine jeweilige einzelne Anoden- oder Kathoden-Lage mittels eines Aufnehmers, zum Beispiel in Gestalt eines Saug- oder Greifwerkzeugs, von der zweiten Übergabestelle U2 aufnimmt und zu der zweiten Abgabestelle A2 bringt.

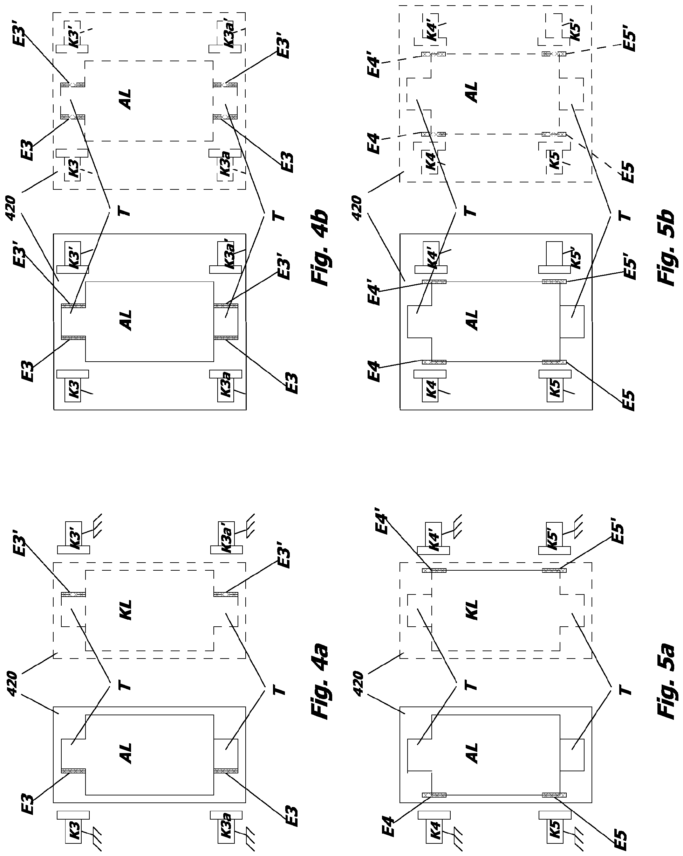

Ein erster dritter Bereich E3 und ein zweiter dritter Bereich E3' - siehe Fig. 4a - des Lagenstapels umfassen jeweils - in der Seitenansicht - eine Anschluss-Fahne der jeweils obersten Anoden- oder Kathoden-Lage AL, KL auf dem Stapeltisch 400 an der ersten bzw. der zweiten Abgabestelle A1, A2. Einer oder zwei dritte Bildaufnehmer K3, K3a, K3', K3a' sind auf einer ersten Seite, zum Beispiel der linken Seite in Fig. 1, der Inspektionsvorrichtung 100 bzw. der Ablage 420 angeordnet, und einer oder zwei dritte Bildaufnehmer K3, K3a, K3', K3a' sind auf einer der ersten Seite gegenüberliegenden zweiten Seite, zum Beispiel der rechten Seite in Fig. 1, der Inspektionsvorrichtung 100 angeordnet. Zwei dritte Bildaufnehmer K3, K3a, K3', K3a' zu einer Seite der Inspektionsvorrichtung 100 bzw. der Ablage 420 sind bezüglich einer Y-Richtung voneinander beabstandet. Einer oder mehrere dritte Bildaufnehmer K3, K3a, K3', K3a' sind in einer Variante ortsfest relativ zu dem zwischen den beiden Abgabestellen A1, A2 hin- und herfahrenden Stapeltisch 400 angeordnet. Dies ist in Fig. 4a veranschaulicht. In nicht näher gezeigten Varianten sind von den vier ortsfesten dritten Bildaufnehmern K3, K3a' K3a, K3', lediglich zwei diagonal angeordnete dritte Bildaufnehmer, also in der Fig. 4a die dritten Bildaufnehmer K3, K3a' oder die dritten Bildaufnehmer K3a, K3', vorgesehen. Alternativ dazu sind in nicht näher gezeigten Varianten von den vier ortsfesten dritten Bildaufnehmern K3, K3a' K3a, K3', lediglich zwei auf einer Seite des Stapeltisches 400 angeordnete dritte Bildaufnehmer, also in der Fig. 4a die dritten Bildaufnehmer K3, K3a oder die dritten Bildaufnehmer K3a', K3', vorgesehen. In einer Variante ist eine optische Achse des einen dritten Bildaufnehmers oder eines jeden der mehreren Bildaufnehmer horizontal orientiert oder weist maximal eine Abweichung von +/- 10° zu einer Horizontalen auf.

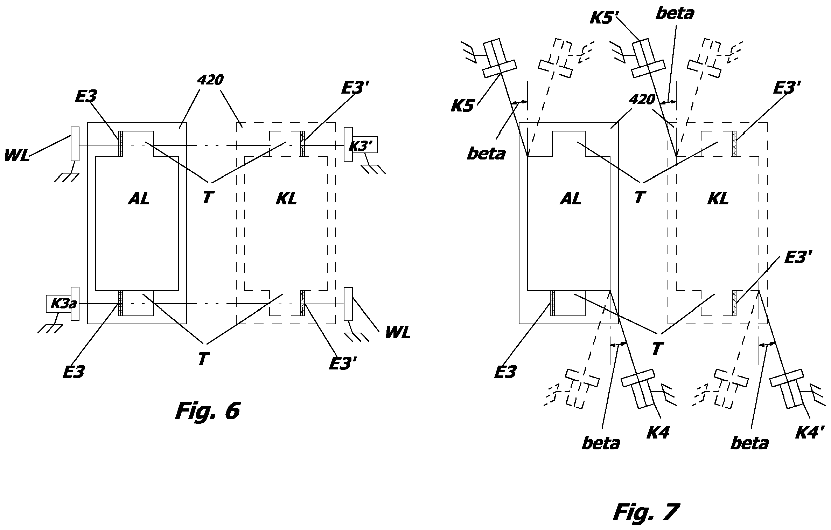

Als eine weitere Variante hierzu zeigt Fig. 6 eine Draufsicht auf die Ablage 420 eines Stapeltisches, auf dem sich ein Lagenstapel befindet, an der ersten und der zweiten Ablagestelle mit einer Konfiguration der Bildaufnehmer für die zweite Inspektion.

Dabei sind exemplarisch die dritten Bildaufnehmer K3a, K3' veranschaulicht, welche mit Gegenlicht oder Durchlicht aus Lichtquellen WL die ersten und zweiten dritten Bereiche E3, E3' jeweils - in der Seitenansicht von außen - erfassen. So wird jeweils eine Anschluss-Fahne der jeweils obersten Anoden- oder Kathoden-Lage AL, KL auf dem Stapeltisch 400 an der ersten bzw. der zweiten Abgabestelle A1, A2 inspiziert.

Sofern die Platzverhältnisse dies zulassen, sind in anderen Varianten ein oder mehrere dritte Bildaufnehmer K3, K3a, K3', K3a' mit dem Stapeltisch 400 fest verbunden - siehe Fig. 4b - und mit diesem zwischen den beiden Ablagestellen A1, A2 verfahrbar. In nicht näher gezeigten Varianten sind von den vier mit dem Stapeltisch verfahrbaren dritten Bildaufnehmern K3, K3a' K3a, K3' lediglich zwei diagonal angeordnete dritte Bildaufnehmer, also in der Fig. 4b die dritten Bildaufnehmer K3, K3a' oder die dritten Bildaufnehmer K3a, K3', vorgesehen. Alternativ dazu sind in nicht näher gezeigten Varianten von den vier mit dem Stapeltisch verfahrbaren dritten Bildaufnehmern K3, K3a' K3a, K3', lediglich zwei auf einer Seite des Stapeltisches 400 angeordnete dritte Bildaufnehmer, also in der Fig. 4b die mit dem Stapeltisch verfahrbaren dritten Bildaufnehmer K3, K3a oder die mit dem Stapeltisch verfahrbaren dritten Bildaufnehmer K3a', K3', vorgesehen.

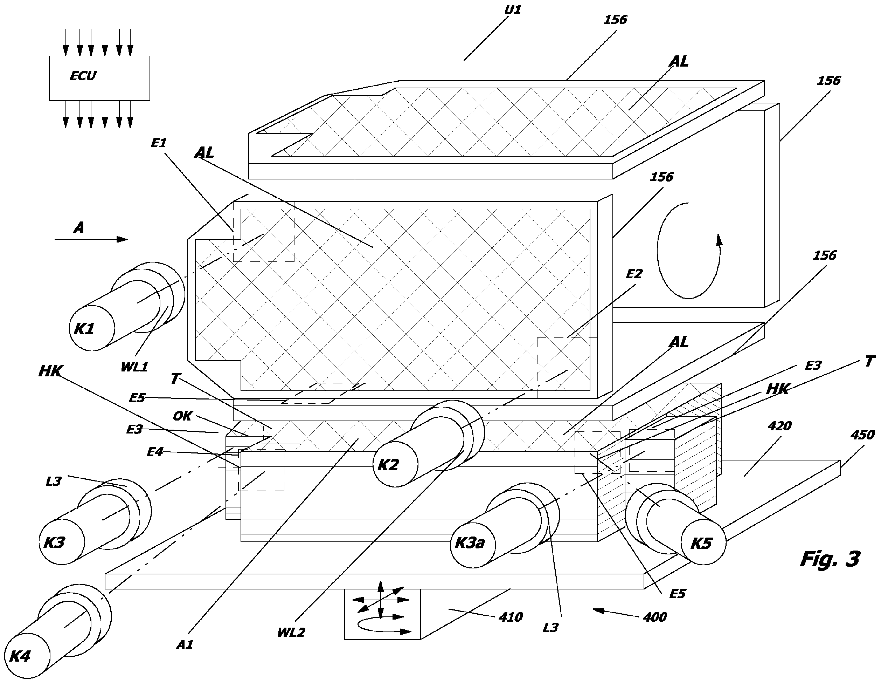

Der/die dritte/n Bildaufnehmer K3, K3a, K3', K3a' sind zur Fokussierung auf die Bereiche E3, E3' entlang ihrer optischen Achse einstellbar. Eine dem/den dritten Bildaufnehmer(n) K3, K3a, K3', K3a' jeweils zugeordnete Lichtquelle L3 - siehe Fig. 3 - erhellt die Anoden-/Kathoden-Lage auf dem Lagen-Stapel für einen Bildeinzug durch den/die dritten Bildaufnehmer. Hier ist die Lichtquelle L3 eine koaxiale Ring-Beleuchtung. Die koaxiale Ring-Beleuchtung ist auf der Seite des dritten Bildaufnehmers K3, unmittelbar bei dem jeweiligen dritten Bildaufnehmer K3, K3a, K3', K3a' diesseits der Position der Anschluss-Fahne T auf dem Stapeltisch 400 angeordnet, und dazu eingerichtet, die Anschluss-Fahne T in den Lichtstrahlengang zu nehmen. So ist mittels einer Verarbeitung des dritten Bildeinzugs ein vertikales Abheben der Anschluss-Fahne T zu erkennen, indem in dem Bildeinzug die oberste Kante der Anschluss-Fahne T nicht waagrecht orientiert ist und/oder eine Störkontur verursacht.

Ein zweites Inspektionsverfahren bei der Herstellung von Modulen oder Vorstufen von Modulen umfasst die Schritte: Aufnehmen einer Anoden-/Kathoden-Lage AL, KL an der ersten Übergabestelle U1 und Bringen der Anoden- oder Kathoden-Lage AL, KL von der ersten Übergabestelle U1 zu einer ersten Abgabestelle A1; Abgeben der jeweiligen einzelnen Anoden- oder Kathoden-Lage AL, KL an der Abgabestelle A1, A2 auf einen Stapeltisch 400 zur Bildung eines Lagen-Stapels; Richten eines dritten Bildaufnehmers K3, K3' auf einen eine Oberkante OK eines auf dem Stapeltisch 400 befindlichen Lagen-Stapels umfassenden Bereich E3 in einer Seitenansicht, wobei der Bereich eine Anschluss-Fahne T einer sich zuoberst auf dem Lagen-Stapel befindlichen Anoden- oder Kathoden-Lage AL, KL umfasst; und wobei mittels des dritten Bildaufnehmers K3, K3' ein dritter Bildeinzug vorgenommen wird, nachdem die Anoden- bzw. Kathoden-Lage AL, KL auf dem Stapel-Tisch 400 abgelegt ist; und Angeben einer Un-Brauchbarkeit des Lagen-Stapels in Abhängigkeit von einer Signalisierung basierend auf einer Verarbeitung des dritten Bildeinzugs.

In der gezeigten Variante erfolgt das Anordnen der koaxialen Ring-Beleuchtung auf der Seite des dritten Bildaufnehmers, diesseits der Position der Anschluss-Fahne T auf dem Stapeltisch 400, und Einrichten des dritten Bildaufnehmers K3, so dass die Anschluss-Fahne T in den Lichtstrahlengang genommen ist. Schließlich erfolgt der dritte Bildeinzug, der in der ECU verarbeitet wird, um mittels einer Verarbeitung des dritten Bildeinzugs ein Abheben der Anschluss-Fahne T zu erkennen, indem in dem dritten Bildeinzug die oberste Kante der Anschluss-Fahne T nicht waagrecht orientiert ist und/oder eine Störkontur verursacht.

Bei einer dritten Inspektionsvorrichtung 100 für Lagenmaterial insbesondere zur Herstellung von Brennstoff- oder Batterie-Zellen nimmt ein erster Lagen-Förderer 150 eine einzelne Anoden- oder Kathoden-Lage AL, KL auf und bringt diese zu einer ersten Abgabestelle A1. Ein Stapeltisch 400 nimmt an der ersten Abgabestelle A1 die Anoden- oder Kathoden-Lage AL, KL zur Bildung eines Lagen-Stapels auf. Der erste Lagen-Förderer 150 gibt an der ersten Abgabestelle A1 die Anoden- oder Kathoden-Lage AL, KL an den Stapeltisch 400 ab. Ein vierter Bildaufnehmer K4 ist auf einen vierten Bereich E4 des Lagen-Stapels aus Anoden- und Kathoden-Lagen AL, KL in einer flächigen Seitenansicht des Lagen-Stapels ausgerichtet und führt einen vierten Bildeinzug aus, nachdem die Anoden- oder Kathoden-Lage AL, KL auf dem LagenStapel auf dem Stapel-Tisch 400 abgelegt ist, wobei der vierte Bereich E4 eine Ecke einer sich zuoberst auf dem Lagen-Stapel befindlichen Anoden- oder Kathoden-Lage AL, KL und/oder eine Hochkante HK des Lagen-Stapels umfasst. Auch nicht nur die zuoberst gestapelte Lage, sondern auch eine oder mehrere weiter unten liegende fehlerhaft positionierte Lagen des Gesamtstapels sind so zu erkennen. So können Ausreißer, die sich auf Grund von Veränderungen in den Prozessen verschoben haben, gefunden werden. In der gezeigten Variante ist ein fünfter Bildaufnehmer K5 auf einen fünften Bereich E5 des Lagen-Stapels aus Anoden- und Kathoden-Lagen AL, KL in einer flächigen Seitenansicht des Lagen-Stapels ausgerichtet und führt einen fünften Bildeinzug aus, nachdem die Anoden- oder Kathoden-Lage AL, KL auf dem Lagen-Stapel auf dem Stapel-Tisch 400 abgelegt ist, wobei der fünfte Bereich E5 eine Ecke einer sich zuoberst auf dem Lagen-Stapel (oder darunter, siehe oben) befindlichen Anoden- oder Kathoden-Lage AL, KL und/oder eine Hochkante HK des Lagen-Stapels umfasst. Die Bereiche E4 und E5 sind hier disjunkt. Insbesondere umfassen der vierte Bereich E4 bzw. der fünfte Bereich E5 der Anoden- oder Kathoden-Lage AL, KL in der Lagen-Fläche benachbart oder diagonal zueinander liegende Bereiche des Lagen-Stapels aus Anoden- und Kathoden-Lagen AL, KL in einer jeweiligen Seitenansicht des Lagen-Stapels.

Der Lagen-Förderer umfasst einen Lagen-Wender 156, um eine einzelne Anodenoder Kathoden-Lage mittels wenigstens eines Aufnehmers 156 von der ersten Übergabestelle U1 aufzunehmen und um einen jeweiligen Rotationswinkel - hier 180° - zu der ersten Abgabestelle A1 zu drehen.

Der vierte Bildaufnehmer K4 und der fünfte Bildaufnehmer K5 sind zur Fokussierung entlang ihrer optischen Achse einstellbar. Eine dem vierten Bildaufnehmer K4 und dem fünften Bildaufnehmer K5 jeweils zugeordnete Lichtquelle erhellt die Anoden-/Kathoden-Lage für einen vierten Bildeinzug bzw. einen fünften Bildeinzug durch den vierten Bildaufnehmer K4 bzw. fünften Bildaufnehmer K5. Dem vierten Bildaufnehmer K4 bzw. fünften Bildaufnehmer K5 ist jeweils wenigstens ein optisch wirksames Element zugeordnet, das die Ecke E4 bzw. E5 der sich zuoberst auf dem LagenStapel befindlichen Anoden- oder Kathoden-Lage AL, KL und die jeweilige Hochkante HK des Lagen-Stapels in dem vierten Bildeinzug bzw. dem fünften Bildeinzug erkennbar zu machen, nachdem die Anoden- bzw. Kathoden-Lage AL, KL auf dem LagenStapel abgelegt ist. Das wenigstens eine optisch wirksame Element ist hier eine koaxiale Ring-Beleuchtung. Die koaxiale Ring-Beleuchtung befindet sich auf der Seite des vierten Bildaufnehmers K4 bzw. des fünften Bildaufnehmers K5, diesseits der Position der Ecke der sich zuoberst (oder weiter unten liegend, siehe oben) auf dem Lagen-Stapel befindlichen Anoden- oder Kathoden-Lage AL, KL und der jeweiligen Hochkante HK des Lagen-Stapels. Sie nimmt - zusammen mit dem jeweiligen Bildaufnehmer -die Ecke und/oder die Hochkante HK in den Lichtstrahlengang. So kann mittels einer Verarbeitung des vierten Bildeinzugs bzw. des fünften Bildeinzugs ein Abheben, Versetzen oder Verdrehen um die Hochachse der Anoden- bzw. Kathoden-Lage AL, KL erkannt werden, indem in dem Bildeinzug die Ecke und/oder die Hochkante HK eine Störkontur verursacht.

Ein erster vierter Bereich E4 und ein zweiter vierter Bereich E4' des Lagenstapels umfassen jeweils eine Ecke der sich zuoberst auf dem Lagen-Stapel befindlichen Anoden- oder Kathoden-Lage AL, KL und einer Hochkante HK des Lagen-Stapels auf dem Stapeltisch 400, wenn dieser sich an der ersten bzw. der zweiten Abgabestelle A1, A2 befindet.

In einer Variante sind ein erster vierter Bildaufnehmer K4 und ein erster fünfter Bildaufnehmer K5 auf einer ersten Seite der Inspektionsvorrichtung 100 angeordnet (in Fig. 5a links), und ein zweiter vierter Bildaufnehmer K4' und ein zweiter fünfter Bildaufnehmer K5' auf einer der ersten Seite gegenüberliegenden zweiten Seite der Inspektionsvorrichtung 100 angeordnet (in Fig. 5a rechts). In Fig. 5a sind diese mehreren vierten bzw. fünften Bildaufnehmer ortsfest relativ zu dem verfahrbaren Stapeltisch 400, genauer gesagt dessen Ablage 420, angeordnet. In Fig. 5b sind diese mehreren vierten bzw. fünften Bildaufnehmer mit dem Stapeltisch 400 verbunden, um mit diesem verfahrbar zu sein.

Um eine kompakte und für die Inspektion vibrationsarme Gesamtanordnung der Inspektionsvorrichtung zu realisieren, sind in einer Variante der erste und/oder der zweite Bildaufnehmer K1, K2, optional zusätzlich auch der erste vierte Bildaufnehmer K4 und/oder der erste fünfte Bildaufnehmer K5, an einem Tragrahmen angeordnet, welcher sich parallel zu dem Aufnehmer 156 erstreckt, wenn der Aufnehmer 156 den ersten und/oder zweiten Bildaufnehmer K1, K2 passiert. In einer weiteren Ausführungsform kann der Tragrahmen L-förmig (horizontal liegendes L) ausgebildet sein und den Lagen-Wender 150 L-förmig umgreifen, sodass eine von dem ersten Antrieb 300 (siehe Fig. 2) abgewandte Seite des Lagen-Wenders 150 an dem Tragrahmen drehbeweglich aufgenommen ist. Dem zweiten Lagen-Wender 200 kann ebenfalls ein derartiger Tragrahmen zum gleichen Zweck zugeordnet sein, um die dem zweiten Lagen-Wender 200 zugeordneten Bildaufnehmer aufzunehmen.

In nicht näher gezeigten Varianten sind von den vier vierten und fünften Bildaufnehmern K4, K4' K5, K5' lediglich zwei diagonal angeordnete Bildaufnehmer, also in der Fig. 5a oder Fig. 5b die Bildaufnehmer K4, K5' oder die Bildaufnehmer K4', K5, vorgesehen. Alternativ dazu sind in nicht näher gezeigten Varianten von den vier mit dem Stapeltisch verfahrbaren vierten und fünften Bildaufnehmern K4, K4' K5, K5' lediglich zwei auf einer Seite des Stapeltisches 400 angeordnete Bildaufnehmer, also in der Fig. 5b die mit dem Stapeltisch 400 verfahrbaren Bildaufnehmer K4, K5 oder die mit dem Stapeltisch verfahrbaren Bildaufnehmer K4', K5', vorgesehen.

Als eine weitere Variante hierzu zeigt Fig. 7 eine Draufsicht auf die Ablage eines Stapeltisches, auf dem sich ein Lagenstapel befindet, an der ersten und der zweiten Ablagestelle mit einer Konfiguration der Bildaufnehmer für die dritte Inspektion. Dabei sind exemplarisch der vierte bzw. fünfte Bildaufnehmer K4, K5, K4', K5' unter einem Winkel beta von etwa ± 5° bis etwa ± 25° zu einer Längs- oder Querkante der zuoberst auf dem Lagen-Stapel befindlichen Anoden- oder Kathoden-Lage AL, KL, zum Beispiel etwa ± 13°, orientiert sind. So wird ein störender Einfluss des (nicht veranschaulichten) schlaufen- oder S-förmigen Endlosseparators vermieden. Dabei kann die optische Achse des vierten bzw. fünften Bildaufnehmers K4, K5, K4', K5' an der ersten bzw. der zweiten Abgabestelle A1, A2 von oben gesehen wahlweise links oder rechts von der (gedanklich) verlängerten Quer- oder Längskante der zuoberst auf dem Lagen-Stapel befindlichen Anoden- oder Kathoden-Lage AL, KL um den Winkel beta geneigt sein. Dies ist mit den gestrichelt gezeigten Bildaufnehmern in der Fig. 7 veranschaulicht. So wird jeweils ein Eckbereich der jeweils obersten Anodenoder Kathoden-Lage AL, KL auf dem Stapeltisch 400 an der ersten bzw. der zweiten Abgabestelle A1, A2 inspiziert. Ein drittes Inspektionsverfahren umfasst die Schritte: Aufnehmen einer Anoden-/Kathoden-Lage AL, KL mittels wenigstens eines Aufnehmers 156, 206 eines Lagen-Wenders 150, 200 von einer Übergabestelle U1, U2; Abgeben der jeweiligen einzelnen Anoden- oder Kathoden-Lage AL, KL von dem jeweiligen wenigstens einen Aufnehmer 156 an einer Abgabestelle A1, A2 auf einen Stapeltisch 400 zur Bildung eines Lagen-Stapels, wenn sich der jeweilige wenigstens eine Aufnehmer 156, 206 an der Abgabestelle A1, A2 befindet; Richten eines vierten Bildaufnehmers K4 auf einen vierten Bereich E4 des Lagen-Stapels aus Anoden- und Kathoden-Lagen AL, KL in einer flächigen Seitenansicht des Lagen-Stapels, wobei der vierte Bereich E4 eine Ecke einer sich zuoberst auf dem Lagen-Stapel befindlichen Anoden- oder Kathoden-Lage AL, KL und/oder eine Hochkante HK des Lagen-Stapels umfasst; und Ausführen eines vierten Bildeinzugs, nachdem die Anoden- oder Kathoden-Lage AL, KL auf dem Lagen-Stapel auf dem Stapel-Tisch 400 abgelegt wurde; und/oder Richten eines fünften Bildaufnehmers K5 auf einen fünften Bereich E5 des Lagen-Stapels aus Anoden- und Kathoden-Lagen AL, KL in einer flächigen Seitenansicht des Lagen-Stapels, wobei der fünfte Bereich E5 eine Ecke einer sich zuoberst auf dem Lagen-Stapel befindlichen Anoden- oder Kathoden-Lage AL, KL und/oder eine Hochkante HK des Lagen-Stapels umfasst; und Ausführen eines fünften Bildeinzugs, nachdem die Anoden- oder Kathoden-Lage AL, KL auf dem Lagen-Stapel auf dem Stapel-Tisch 400 abgelegt wurde. Dabei umfassen der vierte Bereich E4 bzw. der fünfte Bereich E5 der Anoden- oder Kathoden-Lage AL, KL in der Lagen-Fläche benachbart (zum Beispiel an derselben Kante der Lage liegend) oder diagonal zueinander liegende Bereiche des Lagen-Stapels aus Anoden- und Kathoden-Lagen AL, KL in einer jeweiligen Seitenansicht des Lagen-Stapels; und Angeben einer Un-Brauchbarkeit des Lagen-Stapels in Abhängigkeit von einer Signalisierung basierend auf einer Verarbeitung des vierten bzw. des fünften Bildeinzugs.

Der vierte bzw. der fünfte Bildaufnehmer K4, K5 ist zur Fokussierung entlang seiner optischen Achse einstellbar. Der vierte bzw. der fünfte Bereichs E4, E5 für den vierten bzw. den fünften Bildeinzug wird durch den jeweiligen Bildaufnehmer K4, K5 K4', K5' mittels einer dem vierten bzw. dem fünften Bildaufnehmer zugeordneten Lichtquelle erhellt. Dem vierten bzw. dem fünften Bildaufnehmer wird jeweils ein optisch wirksames Element zugeordnet, hier in Form einer koaxiale Ring-Beleuchtung um die Ecke der sich zuoberst auf dem Lagen-Stapel befindlichen Anoden- oder Kathoden-Lage AL, KL und/oder die Hochkante HK des Lagen-Stapels in dem vierten bzw. dem fünften Bildeinzug erkennbar zu machen, nachdem die Anoden- bzw. Kathoden-Lage AL, KL auf dem Lagen-Stapel abgelegt ist. Das Anordnen der koaxialen Ring-Beleuchtung als Auflicht erfolgt auf der Seite des vierten bzw. des fünften Bildaufnehmers, diesseits der Position der Ecke der sich zuoberst auf dem Lagen-Stapel befindlichen Anoden- oder Kathoden-Lage oder der Hochkante des Lagen-Stapels auf dem Stapeltisch. Dazu erfolgt ein Einrichten der Auflicht-Beleuchtung, um die Ecke und die Hochkante HK des Lagen-Stapels in den Lichtstrahlengang zu nehmen. Dies erlaubt mittels einer Verarbeitung des vierten bzw. des fünften Bildeinzugs ein zumindest teilweises Abheben, Versetzen oder Verdrehen der sich zuoberst auf dem Lagen-Stapel befindlichen Anoden- oder Kathoden-Lage AL, KL zu erkennen, in dem die oberste Ecke und/oder die Hochkante HK eine Störkontur verursacht.

Die vorangehend beschriebenen Varianten der Handhabung und Inspektion, deren Aufbau- und Betriebsaspekte, sowie die Varianten der Verfahrensweise dienen lediglich dem besseren Verständnis der Struktur, der Funktionsweise und der Eigenschaften; sie schränken die Offenbarung nicht etwa auf die Ausführungsbeispiele ein. Die Fig. sind teilweise schematisch. Dabei sind wesentliche Eigenschaften und Effekte zum Teil deutlich vergrößert dargestellt, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Vorgehensweise zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

**1.** Eine Inspektionsvorrichtung (100) für Lagenmaterial zur Herstellung von Brennstoff- oder Batterie-Zellen, wobei
- ein erster Lagen-Förderer (150) dazu vorgesehen und eingerichtet ist, eine jeweilige einzelne Anoden- oder Kathoden-Lage (AL, KL) aufzunehmen und zu einer ersten Abgabestelle (A1) zu bringen;
- ein Stapeltisch (400) dazu vorgesehen und dazu eingerichtet ist, an der ersten Abgabestelle (A1) die jeweilige einzelne Anoden- oder Kathoden-Lage (AL, KL) zur Bildung eines Lagen-Stapels aufzunehmen;
- der erste Lagen-Förderer (150) dazu vorgesehen und eingerichtet ist, an der ersten Abgabestelle (A1) jeweils eine einzelne Anoden- oder Kathoden-Lage (AL, KL) an den Stapeltisch (400) abzugeben; und
- ein vierter Bildaufnehmer (K4) auf einen vierten Bereich (E4) des Lagen-Stapels aus Anoden- und Kathoden-Lagen (AL, KL) in einer flächigen Seitenansicht des LagenStapels ausgerichtet und zum Bildeinzug vorgesehen und eingerichtet ist, nachdem die Anoden- oder Kathoden-Lage (AL, KL) auf dem Lagen-Stapel auf dem StapelTisch (400) abgelegt ist, wobei der vierte Bereich (E4) eine Ecke einer sich zuoberst auf dem Lagen-Stapel befindlichen Anoden- oder Kathoden-Lage (AL, KL) und/oder eine Hochkante (HK) des Lagen-Stapels umfasst; und
- ein fünfter Bildaufnehmer (K5) auf einen fünften Bereich (E5) Lagen-Stapels aus Anoden- und Kathoden-Lagen (AL, KL) in einer flächigen Seitenansicht des LagenStapels ausgerichtet und zum Bildeinzug vorgesehen und eingerichtet ist, nachdem die Anoden- oder Kathoden-Lage (AL, KL) auf dem Lagen-Stapel auf dem StapelTisch (400) abgelegt ist, wobei der fünfte Bereich (E5) eine Ecke einer sich zuoberst auf dem Lagen-Stapel befindlichen Anoden- oder Kathoden-Lage (AL, KL) und/oder eine Hochkante (HK) des Lagen-Stapels umfasst; wobei
- der vierte Bereich (E4) bzw. der fünfte Bereich (E5) der Anoden- oder Kathoden-Lage (AL, KL) in der Lagen-Fläche benachbart oder diagonal zueinander liegende Bereiche des Lagen-Stapels aus Anoden- und Kathoden-Lagen (AL, KL) in einer jeweiligen Seitenansicht des Lagen-Stapels umfassen; und wobei
- die Inspektionsvorrichtung dazu eingerichtet ist, eine (Un-)Brauchbarkeit des Lagen-Stapels in Abhängigkeit von einer Signalisierung basierend auf einer Verarbeitung eines Bildeinzugs des vierten bzw. des fünften Bildaufnehmers anzugeben.2. Die Inspektionsvorrichtung (100) nach Anspruch 1, wobei
der Lagen-Förderer einen Lagen-Wender (150) umfasst, der dazu vorgesehen und eingerichtet ist, eine jeweilige einzelne Anoden- oder Kathoden-Lage mittels wenigstens eines Aufnehmers (156) von der ersten Übergabestelle (U1) aufzunehmen, und um einen jeweiligen Rotationswinkel zu der ersten Abgabestelle (A1) zu drehen.

**3.** Die Inspektionsvorrichtung (100) nach Anspruch 1, wobei
der Lagen-Förderer einen Lagen-Greifer umfasst, der dazu vorgesehen und eingerichtet ist, eine jeweilige einzelne Anoden- oder Kathoden-Lage mittels eines Aufnehmers, zum Beispiel in Gestalt eines Saug- oder Greifwerkzeugs, von der ersten Übergabestelle (U1) aufzunehmen, und zu der ersten Abgabestelle (A1) zu bringen.

**4.** Die Inspektionsvorrichtung (100) nach einem der vorhergehenden Ansprüche, wobei
- der vierte Bildaufnehmer (K4, K4') und/oder der fünfte Bildaufnehmer (K5, K5') zur Fokussierung entlang ihrer optischen Achse einstellbar und/oder im Betrieb verfahrbar sind; und/oder
- eine dem vierten Bildaufnehmer (K4, K4') und/oder dem fünften Bildaufnehmer (K5, K5') jeweils zugeordnete Lichtquelle dazu bestimmt und eingerichtet, die Anoden-/Kathoden-Lage für einen vierten Bildeinzug bzw. einen fünften Bildeinzug durch den vierten Bildaufnehmer (K4, K4') bzw. fünften Bildaufnehmer (K5, K5') zu erhellen; und/oder
- dem vierten Bildaufnehmer (K4, K4') bzw. fünften Bildaufnehmer (K5, K5') wenigstens ein optisch wirksames Element zugeordnet ist; wobei
- das optisch wirksame Element dazu bestimmt und eingerichtet ist, die Ecke der sich zuoberst auf dem Lagen-Stapel befindlichen Anoden- oder Kathoden-Lage (AL, KL) und/oder die Hochkante (HK) des Lagen-Stapels in dem vierten Bildeinzug bzw. dem fünften Bildeinzug erkennbar zu machen, nachdem die Anoden- bzw. Kathoden-Lage (AL, KL) auf dem Lagen-Stapel abgelegt ist; und/oder wobei
- das wenigstens eine optisch wirksame Element eine Linse, oder Linsenanordnung, ein Spiegel oder eine Spiegelanordnung, ein Prisma oder eine Prismenanordnung, eine Lichtleiteranordnung, ein Flächen-Licht eine koaxiale Ring-Beleuchtung, eine Dunkelfeld-Beleuchtung, eine Durchlicht-Beleuchtung, oder eine Kombination davon ist.

**5.** Die Inspektionsvorrichtung (100) nach einem der vorhergehenden Ansprüche, wobei
- die Durchlicht-Beleuchtung (DL) auf der gegenüber liegenden Seite des vierten Bildaufnehmers (K4, K4') bzw. des fünften Bildaufnehmers (K5, K5'), jenseits der Position der Ecke der sich zuoberst auf dem Lagen-Stapel befindlichen Anoden- oder Kathoden-Lage (AL, KL) und/oder der Hochkante (HK) des Lagen-Stapels angeordnet ist, und dazu eingerichtet ist, die Ecke und/oder die Hochkante (HK) in den Lichtstrahlengang zu nehmen; und/oder
- mittels einer Verarbeitung des vierten Bildeinzugs bzw. des fünften Bildeinzugs ein Abheben, Versetzen oder Verdrehen der Anoden- bzw. Kathoden-Lage (AL, KL) zu erkennen, indem in dem Bildeinzug die die Ecke und/oder die Hochkante (HK) eine Störkontur verursacht.

**6.** Die Inspektionsvorrichtung (100) nach einem der vorhergehenden Ansprüche, wobei
- die koaxiale Ring-Beleuchtung auf der Seite des vierten Bildaufnehmers (K4, K4') bzw. des fünften Bildaufnehmers (K5, K5'), diesseits der Position der Ecke der sich zuoberst auf dem Lagen-Stapel befindlichen Anoden- oder Kathoden-Lage (AL, KL) und/oder einer Hochkante (HK) des Lagen-Stapels angeordnet ist, und dazu eingerichtet ist, die Ecke und/oder die Hochkante (HK) in den Lichtstrahlengang zu nehmen; und/oder
- mittels einer Verarbeitung des vierten Bildeinzugs bzw. des fünften Bildeinzugs ein Abheben, Versetzen oder Verdrehen der Anoden- bzw. Kathoden-Lage (AL, KL) zu erkennen, indem in dem Bildeinzug die Ecke und/oder die Hochkante (HK) eine Störkontur verursacht.

**7.** Die Inspektionsvorrichtung (100) nach einem der vorhergehenden Ansprüche, wobei
- ein erster vierter Bereich (E4) und ein erster fünfter Bereich (E5) des Lagenstapels jeweils eine Ecke einer ersten Kante der sich zuoberst auf dem Lagen-Stapel befindlichen Anoden- oder Kathoden-Lage (AL, KL) und/oder einer Hochkante (HK) des Lagen-Stapels auf dem Stapeltisch (400) umfassen; und/oder
- ein zweiter vierter Bereich (E4') und ein zweiter fünfter Bereich (E5') des Lagenstapels jeweils eine Ecke einer zweiten Kante der sich zuoberst auf dem Lagen-Stapel befindlichen Anoden- oder Kathoden-Lage (AL, KL) und/oder einer Hochkante (HK) des Lagen-Stapels auf dem Stapeltisch (400) umfassen; und/oder
- ein oder mehrere vierte bzw. fünfte Bildaufnehmer ortsfest relativ zu dem verfahrbaren Stapeltisch (400) angeordnet sind; und/oder
- ein oder mehrere vierte bzw. fünfte Bildaufnehmer (K4, K5, K4', K5') mit dem Stapeltisch (400) verbunden sind um mit diesem verfahrbar zu sein; und/oder
- ein oder mehrere vierte bzw. fünfte Bildaufnehmer (K4, K5, K4', K5') unter einem Winkel von etwa ± 5° bis etwa ± 25° zu einer Längs- oder Querkante der sich zuoberst auf dem Lagen-Stapel befindlichen Anoden- oder Kathoden-Lage (AL, KL), zum Beispiel ± 13° orientiert sind.

**8.** Ein Inspektionsverfahren bei der Herstellung von Modulen oder Vorstufen von Modulen umfasst die Schritte:
- Aufnehmen einer Anoden-/Kathoden-Lage (AL, KL) mittels wenigstens eines Aufnehmers (156, 206) eines Lagen-Wenders (150, 200) von einer Übergabestelle (U1, U2);
- Abgeben der jeweiligen einzelnen Anoden- oder Kathoden-Lage (AL, KL) von dem jeweiligen wenigstens einen Aufnehmer (156) an einer Abgabestelle (A1, A2) auf einen Stapeltisch (400) zur Bildung eines Lagen-Stapels, wenn sich der jeweilige wenigstens eine Aufnehmer (156, 206) an der Abgabestelle (A1, A2) befindet;
- Richten eines vierten Bildaufnehmers (K4) auf einen vierten Bereich (E4) des Lagen-Stapels aus Anoden- und Kathoden-Lagen (AL, KL) in einer flächigen Seitenansicht des Lagen-Stapels, wobei der vierte Bereich (E4) eine Ecke einer sich zuoberst auf dem Lagen-Stapel befindlichen Anoden- oder Kathoden-Lage (AL, KL) und/oder eine Hochkante (HK) des Lagen-Stapels umfasst; und
- Ausführen eines vierten Bildeinzugs, nachdem die Anoden- oder Kathoden-Lage (AL, KL) auf dem Lagen-Stapel auf dem Stapel-Tisch (400) abgelegt wurde; und/oder
- Richten eines fünften Bildaufnehmers (K5) auf einen fünften Bereich (E5) des Lagen-Stapels aus Anoden- und Kathoden-Lagen (AL, KL) in einer flächigen Seitenansicht des Lagen-Stapels, wobei der fünfte Bereich (E5) eine Ecke einer sich zuoberst auf dem Lagen-Stapel befindlichen Anoden- oder Kathoden-Lage (AL, KL) und/oder eine Hochkante (HK) des Lagen-Stapels umfasst; und
- Ausführen eines fünften Bildeinzugs, nachdem die Anoden- oder Kathoden-Lage (AL, KL) auf dem Lagen-Stapel auf dem Stapel-Tisch (400) abgelegt wurde; und/oder wobei
- der vierte Bereich (E4) bzw. der fünfte Bereich (E5) der Anoden- oder Kathoden-Lage (AL, KL) in der Lagen-Fläche benachbart oder diagonal zueinander liegende Bereiche des Lagen-Stapels aus Anoden- und Kathoden-Lagen (AL, KL) in einer jeweiligen Seitenansicht des Lagen-Stapels umfassen; und
- Angeben einer (Un-)Brauchbarkeit des Lagen-Stapels in Abhängigkeit von einer Signalisierung basierend auf einer Verarbeitung des vierten bzw. des fünften Bildeinzugs.

**9.** Das Inspektionsverfahren nach dem vorherigen Anspruch, umfassend weiterhin die Schritte:
- Einstellen des vierten bzw. des fünften Bildaufnehmers (K4, K5) zur Fokussierung entlang seiner optischen Achse und/oder Verfahren des jeweiligen Bildaufnehmers (K4, K5) zur Fokussierung entlang seiner optischen Achse im Betrieb; und/oder
- Erhellen des vierten bzw. des fünften Bereichs (E4, E5) für den vierten bzw. den fünften Bildeinzug durch den jeweiligen Bildaufnehmer (K4, K5) mittels einer dem vierten bzw. dem fünften Bildaufnehmer zugeordneten Lichtquelle; und/oder
- Zuordnen wenigstens eines optisch wirksamen Elements dem vierten bzw. dem fünften Bildaufnehmer, um die Ecke der sich zuoberst auf dem Lagen-Stapel befindlichen Anoden- oder Kathoden-Lage (AL, KL) und/oder die Hochkante (HK) des Lagen-Stapels in dem vierten bzw. dem fünften Bildeinzug erkennbar zu machen, nachdem die Anoden- bzw. Kathoden-Lage (AL, KL) auf dem Lagen-Stapel abgelegt ist; und/oder wobei
- das wenigstens eine optisch wirksame Element eine Linse, oder Linsenanordnung, ein Spiegel oder eine Spiegelanordnung, ein Prisma oder eine Prismenanordnung, eine Lichtleiteranordnung, ein Flächen-Licht eine koaxiale Ring-Beleuchtung, eine Dunkelfeld-Beleuchtung, eine Durchlicht-Beleuchtung, oder eine Kombination davon ist.

**10.** Das Inspektionsverfahren nach einem der vorherigen Verfahrensansprüche, umfassend weiterhin die Schritte:
- Anordnen der Durchlicht-Beleuchtung (DL) auf der gegenüber liegenden Seite des vierten bzw. des fünften Bildaufnehmers (K4, K5, K4', K5'), jenseits der Position der Ecke der sich zuoberst auf dem Lagen-Stapel befindlichen Anoden- oder Kathoden-Lage (AL, KL) und/oder der Hochkante (HK) des Lagen-Stapels auf dem Stapeltisch (400), und dazu
- Einrichten der Durchlicht-Beleuchtung (DL), die Ecke und/oder die Hochkante (HK) des Lagen-Stapels in den Lichtstrahlengang zu nehmen;
um mittels einer Verarbeitung des vierten bzw. des fünften Bildeinzugs ein zumindest teilweises Abheben, Versetzen oder Verdrehen der sich zuoberst auf dem Lagen-Stapel befindlichen Anoden- oder Kathoden-Lage (AL, KL) zu erkennen, in dem die oberste Ecke und/oder die Hochkante (HK) eine Störkontur verursacht.

**11.** Das Inspektionsverfahren nach einem der vorherigen Verfahrensansprüche, umfassend weiterhin die Schritte:
- Anordnen der koaxialen Ring-Beleuchtung auf der Seite des vierten bzw. des fünften Bildaufnehmers (K4, K5, K4', K5'), diesseits der Position der Ecke der sich zuoberst auf dem Lagen-Stapel befindlichen Anoden- oder Kathoden-Lage und/oder der Hochkante des Lagen-Stapels auf dem Stapeltisch, und dazu
- Einrichten der Durchlicht-Beleuchtung (DL), die Ecke und/oder die Hochkante (HK) des Lagen-Stapels in den Lichtstrahlengang zu nehmen;
um mittels einer Verarbeitung des vierten bzw. des fünften Bildeinzugs ein zumindest teilweises Abheben, Versetzen oder Verdrehen der sich zuoberst auf dem Lagen-Stapel befindlichen Anoden- oder Kathoden-Lage (AL, KL) zu erkennen, in dem die oberste Ecke und/oder die Hochkante (HK) eine Störkontur verursacht.

**12.** Das Inspektionsverfahren nach einem der vorherigen Verfahrensansprüche, umfassend weiterhin die Schritte:
- Aufnehmen einer Anoden-/Kathoden-Lage (AL, KL) mittels wenigstens eines zweiten Aufnehmers (206) eines zweiten Lagen-Wenders (200) von einer zweiten Übergabestelle (U2);
- Abgeben der jeweiligen einzelnen Anoden- oder Kathoden-Lage (AL, KL) von dem jeweiligen wenigstens einen Aufnehmer (206) an einer zweiten Abgabestelle (A2) auf den Stapeltisch (400) zur Bildung des Lagen-Stapels, wenn sich der jeweilige zweite Aufnehmer (206) an der Abgabestelle (A2) befindet;
- Richten eines vierten Bildaufnehmers (K4') auf einen vierten Bereich (E4') des Lagen-Stapels aus Anoden- und Kathoden-Lagen (AL, KL) in einer flächigen Seitenansicht des Lagen-Stapels, wobei der vierte Bereich (E4') eine Ecke einer sich zuoberst auf dem Lagen-Stapel befindlichen Anoden- oder Kathoden-Lage (AL, KL) und/oder eine Hochkante (HK) des Lagen-Stapels umfasst; und
- Ausführen eines vierten Bildeinzugs, nachdem die Anoden- oder Kathoden-Lage (AL, KL) auf dem Lagen-Stapel auf dem Stapel-Tisch (400) abgelegt wurde; und/oder
- Richten eines fünften Bildaufnehmers (K5') auf einen fünften Bereich (E5') des Lagen-Stapels aus Anoden- und Kathoden-Lagen (AL, KL) in einer flächigen Seitenansicht des Lagen-Stapels, wobei der fünfte Bereich (E5') eine Ecke einer sich zuoberst auf dem Lagen-Stapel befindlichen Anoden- oder Kathoden-Lage (AL, KL) und/oder eine Hochkante (HK) des Lagen-Stapels umfasst; und
- Ausführen eines fünften Bildeinzugs, nachdem die Anoden- oder Kathoden-Lage (AL, KL) auf dem Lagen-Stapel auf dem Stapel-Tisch (400) abgelegt wurde; und/oder wobei
- der vierte Bereich (E4') bzw. der fünfte Bereich (E5') der Anoden- oder Kathoden-Lage (AL, KL) in der Lagen-Fläche benachbart oder diagonal zueinander liegende Bereiche des Lagen-Stapels aus Anoden- und Kathoden-Lagen (AL, KL) in einer jeweiligen Seitenansicht des Lagen-Stapels umfassen; und
- Angeben einer (Un-)Brauchbarkeit des Lagen-Stapels in Abhängigkeit von einer Signalisierung basierend auf einer Verarbeitung des vierten bzw. des fünften Bildeinzugs.
